# EUROPEAN PATENT SPECIFICATION

(11) **EP 1 916 801 B1**
(45) Date of publication and mention of the grant of the patent: **12.12.2012**
(21) Application number: 06022169.4
(22) Date of filing: 23.10.2006
(51) Int. Cl.: H04L 12/28

(54) **Access point for centralised scheduling in a IEEE 802.11e WLAN**
Zugangspunkte zur zentralisierten Ablauffolgesteuerung in einem IEEE 802.11e WLAN
Point d'accès pour l'ordonnancement centralisé dans un réseau sans fil IEEE 802.11e

(43) Date of publication of application: 30.04.2008
(73) Proprietor: Deutsche Telekom AG, 53113 Bonn (DE)
(72) Inventor: Singh, Jatinder, Pal, Dr., Mountain View, CA 94040 (US); Zerfos, Petros, Dr., 10709 Berlin (DE); Solarski, Marcin, Dr., 10553 Berlin (DE); Vidales, Pablo, Dr., 10437 Berlin (DE)
(74) Representative: Kampfenkel, Klaus

(56) References cited:
- US-A1- 2005 036 466
- LIM L W ET AL: "A QoS scheduler for IEEE 802.11e WLANs" CONSUMER COMMUNICATIONS AND NETWORKING CONFERENCE, 2004. CCNC 2004. FIRST IEEE LAS VEGAS, NV, USA 5-8 JAN. 2004, PISCATAWAY, NJ, USA,IEEE, 5 January 2004 (2004-01-05), pages 199-204, XP010696824 ISBN: 0-7803-8145-9
- FALLAH Y P ET AL: "A Unified Scheduling Approach for Guaranteed Services over IEEE 802.11e Wireless LANs" BROADBAND NETWORKS, 2004. FIRST INTERNATIONAL CONFERENCE ON SAN JOSE, CA, USA 25-29 OCT. 2004, PISCATAWAY, NJ, USA,IEEE, 25 October 2004 (2004-10-25), pages 375-384, XP010749113 ISBN: 0-7695-2221-1
- DEL PRADO J ET AL: "Normative text for mandatory TSPEC parameters and informative text for a simple scheduler" IEEE 802.11-02/705R0, 12 November 2002 (2002-11-12), pages 1-4, XP002301241
- MEDINA P ET AL: "Service differentiation at the MAC level in the wireless segment of IEEE 802.11 WLANs'" ELECTRICAL AND ELECTRONICS ENGINEERING, 2004. (ICEEE). 1ST INTERNATIONAL CONFERENCE ON ACAPULCO, MEXICO 8-10 SEPT., 2004, PISCATAWAY, NJ, USA,IEEE, 8 September 2004 (2004-09-08), pages 78-83, XP010800587 ISBN: 0-7803-8531-4

## Description

### Field of the Invention

The present invention relates to centralized scheduling of traffic streams in a wireless local area network (WLAN) by the Hybrid Coordinator (HC) of an IEEE 802.11e compliant QoS Access Point (QAP). The invention addresses fairness amongst the uplink and downlink traffic streams from QoS wireless stations (QSTAs) to the QAP.

### Background of the Invention

In September 2005, the Institute for Electrical and Electronics Engineers (IEEE) ratified an amendment to the 802.11 standard for wireless local area networks (WLAN), which defines the medium access control (MAC) procedures to support local area network (LAN) applications with quality of service (QoS) requirements. This amendment, "Medium Access Control (MAC) Quality of Service Enhancements to Wireless LAN," Amendment 8 to Medium Access Control (MAC) and Physical Layer (PHY) specification ANSI/IEEE Std. 802.11, 2005, is mostly known by the abbreviation 802.11e and its main goal is to provide Ethernet-like QoS support for traffic streams transmitted over WLANs using 8021.D-like priorities.

The original 802.11 MAC provides two main methods for accessing the wireless medium: the Distributed Coordination Function (DCF), in which stations (STAs) and the access point (AP) share the wireless medium using Carrier Sense Multiple Access with Collision Avoidance (CSMA/CA). DCF is adequate for delivering best-effort traffic but no medium access priority or support for delay-bounded applications is available. The other method, the Point Coordination Function (PCF), enables contention-free access to the wireless medium through a polling method. However it lacks mechanisms for differentiating between types of traffic (e.g., voice, video, best-effort), mechanisms for stations to communicate their QoS requirements to the access point, and the loosely-controlled polling schedule.

The 802.11e amendment defines a set of service primitives, functions and frame formats for supporting QoS in WLANs that are collectively termed *QoS facility.* It introduces the concept of *Hybrid Coordination Function* (HCF), which combines the approaches of DCF and PCF with enhancements for QoS provisioning. HCF has two modes of operation for traffic prioritization and differentiation: the Enhanced Distributed Channel Access (EDCA), which is contention-based, and the Hybrid coordination function Controlled Channel Access (HCCA), which is polling-based. The QoS facility supports eight priority values referred to as User Priorities (UPs), which are identical to the IEEE 802.1D priority tags. A MAC Service Data Unit (MSDU) is said to belong to a Traffic Category (TC) based on its UP. Central concept to the operation of the HCF is the Transmission Opportunity (TXOP); it is defined as the time interval during which a particular quality of service station (QSTA) has the right to initiate frame exchange sequences onto the wireless medium (WM). TXOPs are necessary for transmission in both modes of the HCF, although they are obtained through different means.
The first HCF mode for accessing the wireless medium, EDCA, delivers traffic based on mapping of differentiating UPs to four Access Categories (AC). It uses the following elements for prioritization: a) amount of time a station senses the wireless channel to be idle before attempting to capture it, b) the length of the contention window, c) the duration a station may transmit after acquiring the channel. Each Access Category has its own transmission queue and contends independently for Transmission Opportunities using CSMA/CA, based on the above parameters.

The main object of the the Hybrid coordination function Controlled Channel Access (*HCCA*), the second access method of the *Hybrid Coordination Function (HCF),* is to provide limited-duration controlled access for contention-free transfer of QoS data. It makes use of a QoS-aware centralized coordinator collocated with the access point, called the *Hybrid Coordinator* (HC). The HC has the highest priority of access to the wireless medium to initiate frame exchange sequences and to allocate TXOPs to itself and other QSTAs. A polling mechanism is employed to allow a non-access point QSTA to request the HC for TXOPs with specific QoS parameters (such as data rate, latency, etc.), both for its own transmissions as well as transmissions from the AP to itself. For the requests that have been accepted, the HC schedules TXOPs for both the access point and the stations during the contention period CP and any locally generated Contention-Free Period (CFP) to meet the QoS requirements of a particular Traffic Stream (TS).

QSTAs communicate their traffic stream characteristics and QoS requirements to the HC using Traffic Specification (TSPEC) elements to get transmission reservations. TSPEC parameters are derived from the requirements of the application that requests for QoS-enabled service, and also from information specific to the MAC layer. The former class includes TSPEC parameters such as nominal MSDU size, maximum service interval, mean data rate and delay bound. In the latter, TSPEC parameters are determined using assumptions such as the probability of not transmitting a frame, and a model for channel error. The HC either accepts or rejects TSPEC parameters based on an admission control policy and traffic admitted in the context of a TSPEC can be sent using EDCA, or HCCA, or even a mixed mode of them.

The QoS facilities described above are employed by the two main components of the HC that provides quality of service in the context of 802.11e: the admission control unit and the scheduler. The admission control unit decides on the admissibility of a traffic stream for transmission, based on a number of criteria such as the vendor's implementation of the scheduler (see below), available channel capacity, link conditions, retransmission limits and the scheduling requirements of the traffic stream as communicated in its TSPEC parameters. Since the QoS facility supports two access mechanisms, there are two distinct admission control mechanisms: one for contention-based access and another for controlled access. This invention assumes the use of some pre-existing controlled-access admission control mechanism.

The QoS scheduler component provides intra-QBSS QoS frame transfers under the HCF, using either contention-based or controlled channel access. At each transmission opportunity TXOP, the traffic scheduler component at the QSTA selects a frame for transmission from the set of frames at the heads of backlogged traffic streams, based on requested user priority and/or parameter values in the TSPEC for the requested MSDU. Backlogged traffic streams are those that have MSDUs or data packets waiting for transmission. For the traffic streams that have been admitted by the admission control unit, the scheduler ensures that the respective QSTAs with admitted traffic streams are offered TXOPs that satisfy the service schedule. If a traffic stream TS is admitted, then the scheduler shall service the non-AP QSTA during a Service Period, defined as a contiguous time during which a set of one or more downlink unicast frames and/or one or more polled TXOPs are granted to the QSTA. The scheduler should also ensure that sufficient cumulative TXOP allocations are made to accommodate any retransmissions needed due to bad channel conditions. The 802.11e amendment does not mandate the use of a specific scheduler entity as long as it complies with the normative behaviour of a scheduler as described in 802.11e standard.

The transmission of traffic streams in wireless environments poses significant challenges that need to be taken into account in the design of a scheduling algorithm that provides *fair service* as described in Nandagopal, Lu, and Bhargavan, "A Unified Architecture for the Design and Evaluation of Wireless Fair Queuing Algorithms," Mobicom 1999. Such an algorithm should guarantee that channel allocation is fair among backlogged traffic streams that are able to transmit packets (short-term fairness). It should support delay-sensitive and error-sensitive data streams and so long as a stream experiences bounded channel errors, none of its packets should wait indefinitely to be transmitted (channel-conditioned delay bounds). Furthermore, a scheduling algorithm should make sure that even if a traffic stream has received additional service in the sense of transmission opportunities in a previous time window, its degradation of service in any subsequent time window must be graceful (short-term throughput bounds). Additionally, long-term fairness should not be violated as long as every backlogged stream has sufficient number of error-free slots for the transmission of its packets.

A scheduler allocates channel capacity to admitted, backlogged traffic streams while trying to meet the aforementioned requirements. However, when a stream perceives channel errors, then channel allocation is reassessed and the scheduler *swaps* the stream with one that perceives a clean channel. Stream swapping is central to the operation of a scheduler, and several of its modules deal with how swapping is performed, the choice of streams to be swapped, as well as the structure of the compensation model. In particular, the following modules are central to the operation of the scheduler and its swapping approach:
■ *Lead and lag model*: streams are said to be *leading* if they receive channel allocation in excess of what a hypothetical stream (also known as *error-free service*) would have received in the same time instant should its channel be error-free and under identical offered load. Under the previous definition, streams that receive less channel allocation than this hypothetical stream are said to be *lagging.* The lead-and-lag model in a wireless service such as a fair scheduler determines which streams are leading (or lagging) their error free service, and by how much. To quantify the amount by which streams lead or lag their respective error-free service, the concept of *virtual time V(t)* is introduced. It denotes the normalized (according to the rates of the streams) fair amount of service (in the sense of channel allocation slots) that each session should have received by time t.
■ *Compensation model*: lagging streams that perceive an error-free channel at some point need to be compensated, possibly at the expense of leading streams that have received excess service in the past. The compensation model is responsible for handling such reallocation of channel resources among streams to address key issues of bursty and location-dependent wireless channel errors. *Forced compensation,* as employed by the Channel-Independent Fair Queuing Algorithm (C-IFQ) discussed in Ng, Stoica, and Zhang, "Packet Fair Queuing Algorithms for Wireless Networks with Location Dependent Errors," IEEE INFOCOM 1998, is a specific instantiation of the compensation model that deals with the pathological case in which all active streams are in error. A stream is forced to receive service and is charged for it even if it cannot send any packet. This makes it possible to ensure delay and throughput guarantees for error-free streams.

PCT application No. WO 03043266 with the title of "Apparatus and Method for Providing Quality of Service Signalling for IEEE 802.11 MAC," discloses a method and apparatus for specifying and negotiating network resources for a QoS based stream based on the QoS requirements of a user. In particular, upstream and downstream signalling for IEEE 802.11e MAC layer is presented. According to an embodiment a signalling mechanism for the central scheduling functionality of the HC is mentioned.

US patent no. US 2006039395 with the title of "Method for Improving Quality of Service in a Wireless Network," discloses a method for a preferably IEEE 802.11e like WLAN to improve the quality of service conjunction with the power save mode by maintaining multiple power save mode queues. However, this patent does not address fair scheduling mechanisms for upstream and downstream traffic in a WLAN.
A set of fairness properties for streams on the wireless channel are characterized and an algorithm for realizing them is proposed in Ng, Stoica, and Zhang, "Packet Fair Queuing Algorithms for Wireless Networks with Location Dependent Errors," IEEE INFOCOM 1998. The operational framework for algorithm does not address 802.11 WLANs. It does not account for characteristics of the streams other than their rates and also does not address joint scheduling for uplink and downlink streams in a network.

A scheduling framework for joint uplink and downlink scheduling for 802.11e WLANs is proposed in Fallah, Elfeitori, and Alnuweiri, "A Unified Scheduling Approach for Guaranteed Services over IEEE 802.11e WLANs," International Conference on Broadband Communications, Networks, and Systems, 2004. In this work, a modified version of Weighted Fair Queuing (WFQ) is employed and a Multiple Access Hybrid Scheduling (MAHS) is proposed. The work does directly establish the relation between TSPEC elements of streams being scheduled with the parameters of the scheduling algorithm. In order to schedule uplink packets and downlink packets an access point generates virtual packets which are representations of uplink packets from a station to the access point. Each downlink packet and each virtual packet is time-stamped and queued in its corresponding queue. Next, the packet, i.e. a virtual packet or a downlink packet, with the smallest time-stamp is selected. The scheduler of the access point now determines whether the selected packet is a downlink packet or a virtual packet. A downlink packet is transmitted according to known MAC rules to the respective station whereas a virtual packet is transmitted to a unit that generates a poll message. The poll message is sent to the station which contains uplink packets to be sent to the access point.

In L.W. Lim et al. "A QoS scheduler for IEEE 802.11e WEANS' consumer communications and networking conference", 2004. CCNC 2004. First IEEE Las Vegas, NV. USA 5-8 Jan. 2004, Piscataway, N.J. USA, IEEE, 5 January 2004, an access point is disclosed having a scheduler for generating a polling structure. Therefore, the scheduler is only used for scheduling of the transmission of uplink traffic flows. In particular, this document describes how to compute TXOP durations for individual uplink streams and how to generate an aggregated TXOP requirement per station that has uplink **traffic flows to send.**

### Summary of the Invention

The present invention is concerned with the design of a centralized scheduler for the hybrid coordination function of the 802.11e. We note that a traffic stream is defined as a set of medium access control (MAC) service data units (MSDUs) to be delivered subject to the quality of service (QoS) parameter values provided to the MAC in a particular traffic specification (TSPEC).

It is an object of the present invention to provide a method, a wireless local area network and an access point using a scheduling function to increase QoS performances in order to allow, in particular, multimedia sessions such as voice over IP.

An exemplary embodiment of the present invention uses the HCCA functionality of a QoS access point to implement a fair scheduling algorithm for the traffic streams between QoS stations (QSTA) and a QoS access point (QAP). In particular, a central scheduling function (CSF) is employed to ascertain the traffic stream of a QSTA or the QAP which gets access to a wireless channel for transmission of the ascertained traffic stream. Accordingly, an exemplary embodiment of the current invention can be used to perform fair centralized scheduling for the traffic streams in a QBSS.

According to an exemplary embodiment of the present invention a schedule set S of traffic streams is employed on which the scheduling algorithm is operated. The set can comprise all downlink and/or uplink traffic streams in a QBSS. Consequently an exemplary embodiment of the present invention can be used to schedule the downlink and/or uplink traffic streams in a QBSS.

An exemplary embodiment of the present invention uses a scheduling parameter called *accruedCredit* to evaluate the service that a traffic stream (session) has forgone due to the physical transmission rate of the wireless channel being lower than the minimum transmission rate required by the specific traffic stream. A traffic stream can be initiated by a QoS station or a QoS access point by requesting for access to the wireless medium for transmission of a traffic stream. A further scheduling parameter called virtual time is used in the present invention to fairly schedule the access of the QoS access point or a Qos station to the wireless medium. The virtual time defines a time by which the QoS access point or a QoS station should have received the allowance to send a traffic stream which is waiting for transmission. In particular, if the traffic stream is unable to be transmitted, the virtual time for the traffic stream is advanced and the *accruedCredit* parameter of the traffic stream is increased by the amount of service (in bytes) it has to forgo. The traffic stream eligible for transmitting is ascertained by finding the traffic stream with minimum virtual time and non-negative *accruedCredit.* If such a traffic stream with a minimum virtual time also has a negative *accruedCredit,* then its transmission turn is swapped with a traffic stream which can be transmitted and has the maximum ratio *accruedCredit*/*ρ,* wherein ρ is the mean data transmission rate for the swapped traffic stream. This traffic stream is herein also called "swapped traffic stream" or "alternative traffic stream". In the event that none of the traffic streams can be transmitted, forced compensation is performed by charging, i.e. updating the scheduling parameters of the traffic streams with the maximum *accruedCredit*/*ρ.* Force compensation fits in the CIF-Q algorithm and thus provides delay and throughput guarantees for traffic streams that can transmit and long term fairness for traffic streams that cannot, as explained in Ng, Stoica, and Zhang, "Packet Fair Queuing Algorithms for Wireless Networks with Location Dependent Errors," IEEE INFOCOM 1998.

An exemplary embodiment of the present invention provides fair scheduling for traffic streams in a QBSS. The set of traffic streams S to be scheduled is ascertained as the admitted downlink traffic streams that are backlogged and all admitted uplink traffic streams. Fair scheduling is known to be critical for supporting multimedia applications over wireless. Consequently, an exemplary embodiment of the present invention can be used for providing voice and video services in IEEE 802.11e capable wireless local area networks.

An exemplary embodiment of the present invention schedules the traffic streams in a QBSS supported by a QAP. A QAP may, in general, support multiple QBSSs by broadcasting multiple QBSSIDs which may be used to support different categories of users, or classes of traffic.

Consequently, an exemplary embodiment of the present invention can be used to perform centralized fair scheduling for specialized traffic classes or categories of a users served by a QAP.

The above mention technical problem is solved by a method for centralized scheduling the transmission of traffic streams between a QoS access point and at least one QoS wireless station in a wireless local area network supporting QoS data transmission. The method comprises the steps of:
a. Storing the data belonging to a plurality of traffic streams to be scheduled by the QoS access point, each traffic stream being represented by at least one scheduling parameter;
b. Selecting the traffic stream the at least one scheduling parameter of which has a certain value;
c. determining whether the selected traffic stream fulfils predetermined eligibility criteria for transmission;
d. Controlling the transmission of the selected traffic stream on a wireless channel by the QoS access point, if the selected traffic stream is eligible for transmission;
e. Updating the scheduling parameters of the traffic streams to be scheduled;
f. Repeating steps b. to e. for scheduling the transmission.

The step of controlling the transmission of traffic stream covers both the initiation of the transmission of a downlink traffic stream which is waiting for transmission from the QoS access point to a predetermined wireless QoS station as well as the initiation of the transmission of an uplink traffic stream which is allowed to be transmitted from a predetermined wireless QoS station to the QoS access point.

In order to improve the fair centralized scheduling performed by the QoS access point the scheduling parameters include a virtual time, and an accruedCredit value for each traffic stream to be scheduled. The accruedCredit value evaluates the service that a traffic stream has not been transmitted due to the physical transmission rate of the wireless channel being lower than the minimum transmission rate required by the respective traffic stream.

In this case step b) comprises the step of selecting the traffic stream having the minimum virtual time associated therewith, and wherein step c) comprises step c1) of determining whether the physical transmission rate on the wireless channel is greater than the minimum transmission rate associated with the selected traffic stream and determining whether the *accruedCredit* value of the selected traffic stream is non-negative, wherein step d) is executed if the determinations of step c1) are affirmative.
A swapping procedure is executed if the determinations of step c1) are not affirmative. Therefore, an alternative traffic stream is selected which replaces the traffic stream as selected in step b).

The alternative traffic stream, also referred to swapped traffic stream, can be selected by determining the maximum ratio *accruedCredit value*/*ρ,* wherein ρ is the mean data transmission rate associated with the alternative traffic stream.

Next, it is determined whether the selected alternative traffic stream is eligible for transmission. If the selected alternative traffic stream is not eligible for transmission, i. e. neither the traffic stream selected in step b) nor the swapped traffic stream is permitted to be transmitted, a force compensation procedure is executed.

According to a preferred method the step of executing a force compensation comprises, for example, the step of selecting the compensation traffic stream which has the largest ratio *accruedCredit value*/*ρ,* the step of increasing the accruedCredit parameter of the selected alternative traffic stream by T₀*R and the step of decreasing the accruedCredit parameter of the selected compensation traffic stream by T₀*R, wherein To represents a timeout of a timer and R represents the physical transmission rate of the selected alternative traffic stream.
The centralized scheduling algorithm can be further improved by using TSPEC parameters. Each traffic stream to be scheduled is, for example, represented by a set of TSPEC parameters, which includes physical and MAC parameters, such as the mean data rate p, the nominal MSDU size, the transmission opportunity. The TSPEC parameters are provided in TSPEC elements to the QoS access point. If the QoS access point has downlink traffic streams to be transmitted the TSPEC parameters are generated by the QoS access point itself. If a QoS station wishes to transmit uplink traffic streams the TSPEC parameters are transmitted, for example, together with the request for wireless channel access from the QoS station to the QoS access point.

The plurality of traffic streams to be scheduled can comprises uplink traffic streams which have been admitted for transmission from a wireless QoS station to the QoS access point and/or downlink traffic streams waiting for transmission form the QoS access point to respective wireless QoS stations.

In order to allow the QoS access point to differentiate downlink and uplink traffic streams a direction parameter representing the transmission direction is associated with each traffic stream to be scheduled. The direction parameter can be a TSPEC parameter. Therefore, step d) comprises the step of determining whether the selected traffic stream or the selected alternative traffic stream is a downlink or an uplink traffic stream, generating a poll-message and transmitting the poll-message to the wireless QoS station to initiate transmission of the uplink traffic stream to the QoS access point if the traffic stream selected in step b) or the alternative traffic stream is an uplink traffic stream or transmitting the selected traffic stream or the selected alternative traffic stream to the respective wireless QoS station if the selected traffic stream or the alternative traffic stream is a downlink traffic stream.

In order to efficiently transmit QoS data in uplink or downlink traffic streams the poll-message is piggybacked onto the QoS data for a selected downlink traffic stream currently scheduled for transmission to a respective wireless QoS station, if the uplink traffic stream belonging to the poll-message is eligible for transmission from said wireless QoS station to the QoS access point.

In a similar way, QoS Data of the determined downlink traffic stream is piggybacked onto the poll-message belonging to the uplink traffic stream currently scheduled for transmission, if the downlink traffic stream from the QoS access point to the wireless QoS station is eligible for transmission.

In order to update the scheduling parameter in step e) the TSPEC parameters associated with the plurality of traffic streams to be scheduled are used.

In particular the virtual time and the accruedCredit parameter of the selected traffic stream are each increased by a predetermined value, and the accruedCredit parameter of the alternative traffic stream is decreased by a predetermined value, if the selected alternative traffic stream is an uplink traffic stream. In this case the virtual time can be increased by (*TXOP _{f swap}** *R _{f swap})* /ρ*_{fswap},* where *TXOP _{f swap}* is the transmission opportunity for the alternative uplink traffic stream, *R _{fswap}* is the physical transmission rate for the alternative uplink traffic stream and *ρ _{f swap}* is the mean data transmission rate of the alternative uplink traffic stream and wherein the attribute *accruedCredit* can be increased by *TXOP _{f swap}* R _{f swap}* and the *accruedCredit* of the alternative traffic stream my be decreased by *TXOP _{f swap}* R _{f swap}.*

In addition, the virtual time of the uplink traffic stream selected in step b) which is eligible for transmission is increased in step e) by a predetermined value and its accrued Credit parameter remains unchanged.

In particular, the virtual time of the selected traffic stream can be increased by *MSDU*_{*f* swap} /ρ *_{f swap},* where *MSDU_{f swap}* is the MSDU size of the alternative traffic stream, wherein *accruedCredit* parameter of the selected traffic stream can be increased by *MSDU_{f swap}* and wherein the *accruedCredit* parameter of the alternative traffic stream can be decreased by *MSDU_{f swap},* if the selected alternative traffic stream is a downlink traffic stream.

In a preferred embodiment, the virtual time of the downlink traffic stream selected in step b) which is eligible for transmission is increased by *MSDU_{fswap} l*ρ *_{f swap}* and its *accruedCredit* parameter is not changed.

In a preferred embodiment, the QoS data to be transmitted via uplink and/or downlink traffic streams comprises multimedia data such as voice and/or video.

The above mentioned technical problem is also solved by a QoS wireless local area network (WLAN). The QoS WLAN comprises a plurality of wireless QoS stations and a QoS access point connected via a shared wireless channel to transmit uplink and/or downlink traffic streams. The QoS access point comprises first storage means for storing a plurality of traffic streams to be scheduled, each traffic stream being represented by at least one scheduling parameter, second storage means for storing physical parameters of the wireless channel and medium access control (MAC) parameters, and a hybrid coordination module adapted to select the traffic stream the at least one scheduling parameter of which has a certain value, to determine whether the selected traffic stream fulfils predetermined eligibility criteria for transmission in response to the physical an MAC parameters, to control the transmission of the selected traffic stream via the wireless channel, if the selected traffic stream is eligible for transmission, and to update the scheduling parameters of the traffic streams to be scheduled.

The above mentioned technical problem is further solved by an IEEE 802.22e compliant access point, which comprises first storage means for storing a plurality of traffic streams to be scheduled, each traffic stream being represented by at least one scheduling parameter, second storage means for storing physical parameters of the wireless channel and medium access control (MAC) parameters, and a hybrid coordination module adapted to execute the method of any one of the claims 1 to 20.

The above mentioned technical problem is last but not least solved by a storage means having stored a set of instructions therein, the set of instructions being executable by a processing unit of an IEEE 802.22e compliant access point to perform a method of any one of the claims 1 to 20.

### Brief Description of the Drawings

The invention, together with its objects and the advantages thereof, may be best understood by reference to the following description taken in conjunction with the accompanying drawings in which:
- Fig. 1: shows an exemplary IEEE802.11e capable wireless network supporting uplink and downlink traffic streams between wireless QoS stations and a QoS access point;
- Fig. 2: shows MAC architecture with a centralized scheduler located in the Hybrid Coordinator of the QoS access point, shown in Fig. 1;
- Fig. 3: shows an exemplary architecture of the centralized scheduler of Fig. 2 for scheduling uplink and downlink traffic streams at the QoS access point;
- Fig. 4: shows exemplary functional modules for the operation of the central scheduler of Fig. 2;
- Fig. 5: shows an exemplary method to include an uplink traffic stream in the schedule set when the traffic stream is admitted by an admission control unit;
- Fig. 6: shows an exemplary method to include a downlink traffic stream in the schedule set when the traffic stream is backlogged;
- Fig. 7: shows an exemplary method to ascertain the next transmission by the centralized scheduler;
- Fig. 8: shows an exemplary method to ascertain if a traffic stream is eligible for transmission;
- Fig. 9: shows an exemplary method to ascertain the swap traffic stream for scheduling;
- Fig. 10: shows an exemplary method to charge a traffic stream;
- Fig. 11: shows an exemplary method for updating the schedule set;
- Fig. 12: shows an exemplary method to delete a traffic stream from the schedule set;
- Fig. 13: shows an exemplary method to force compensation for a traffic stream; and
- Fig. 14: shows an illustrative block diagram of the QoS access point of Fig. 1

### Detailed Description of the Invention

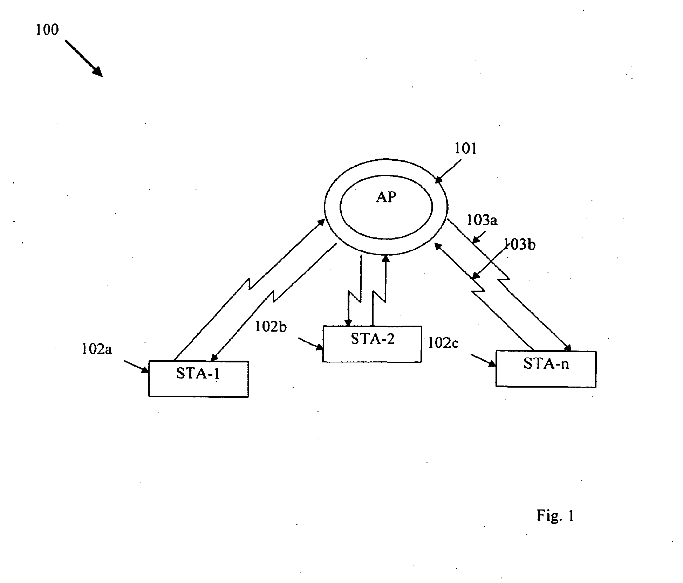

Figure 1 shows an exemplary IEEE 802.11e compliant wireless local area network (WLAN) 100 which comprises, for example, a single quality of service access point (QAP) 101 and a plurality of wireless Quality of Service stations (QSTAs) 102a, 102b, and 102c forming a Quality of Service Basic Service Set QBSS. Only three wireless Quality of Service stations are shown, which are briefly termed hereinafter as wireless QoS stations. All wireless QoS stations are adapted to transmit uplink traffic streams via a wireless channel to the QoS access point 101 and to receive downlink traffic streams via a wireless channel from the Qos access point 101. For example, wireless station 102c receives downlink traffic streams on a wireless link 103a from the QoS access point 101 and sends uplink traffic streams on a wireless link 103b to the QoS access point 101. Normally, the QoS access point has different traffic streams, i.e. a plurality of data frames, queued for downlink transmissions to one or more wireless stations, which have to be appropriately scheduled. In addition, the QoS access point 101 queues poll messages to be sent to one or more wireless stations to allocate transmission opportunities TXOPs to the stations and to initiate them to send their traffic streams. If a wireless QoS station wishes to access the wireless medium to transmit uplink traffic streams, it requests for a transmission opportunity TXOP from the QoS access point 101. Therefore, the wireless QoS station having uplink traffic streams to send generates management frames including TSPEC parameters and sending them to the QoS access point 101. TSPEC parameters represent requirements of the application requesting service and the characteristics of the MAC layer of the QoS station. For example one of the TSPEC parameter represents the minimum transmission rate required by traffic stream. Since the wireless channel is shared amongst the wireless stations 102a, 102b, 102c and the QoS access point 101 to send uplink and downlink traffic streams, respectively, appropriate scheduling measures accounting for fairness for the uplink and downlink traffic streams have to be taken. Although scheduling can be performed in a distributed fashion via algorithms executed by both the wireless stations 102a, 102b, 102c as well as by the QoS access point 101, we consider a fair centralized scheduling procedure performed by a hybrid coordinator located in the IEEE 802.11e capable access point 101. As will be described now, the QoS access point 101 is designed to a) centrally control the transmission of uplink traffic streams originating from the wireless QoS stations by centrally scheduling the transmission of polls in response to the request for TXOPs received from the wireless stations, which is done by queuing respective polling messages to be sent to the wireless stations and to b) centrally schedule the transmission of downlink traffic streams on the wireless medium to predetermined wireless stations.

It is to be noted that a downlink or uplink traffic stream contains a plurality of MDSUs. Furthermore, it is to be noted that the QoS access point 101 can be adapted to control the wireless station of the QoS basic service set (QBSS) shown in Fig. 1 as well as the wireless stations of other QoS basic service sets by broadcasting multiple QBSS identification signals to the respective wireless stations.

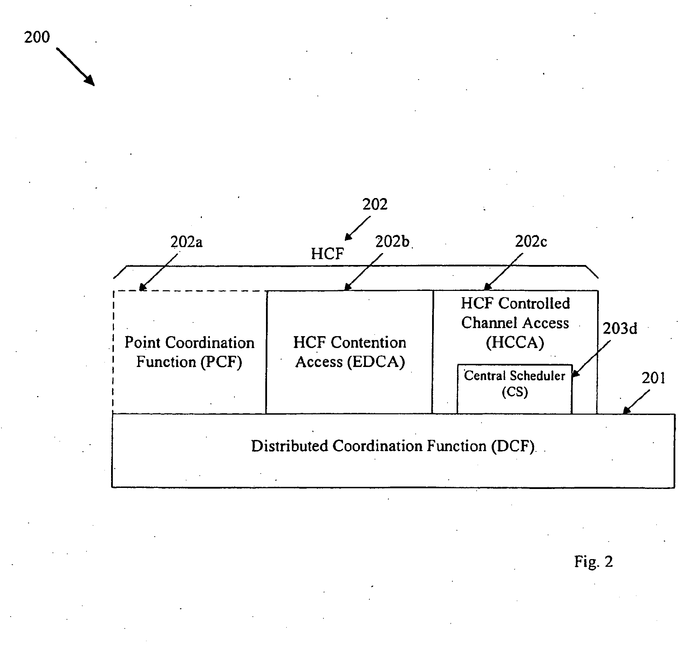

Figure 2 shows an exemplary functional architecture 200 of the medium access control (MAC) layer of the QoS access point 101. The MAC layer comprises a hybrid coordinator 202 which embodies the hybrid coordination function to fairly control access to a wireless medium and to permit the wireless stations 102a, 102b, 102c and the QoS access point 101 to transmit uplink and downlink traffic streams, respectively. The hybrid coordinator 202 comprises a Point Coordination Function (PCF) module 202a, an Enhanced Distributed channel access (EDCA) module 202b and a Hybrid Controlled Channel Access (HCCA) module 202c. A central scheduler 203d (CS) resides, for example, in the hybrid controlled channel access (HCCA) module 202c. Its function will be described in detail below. The existence of the PCF module 202a is optional. Furthermore, the hybrid coordinator 202 uses the functionality of the Distributed coordination function (DCF).

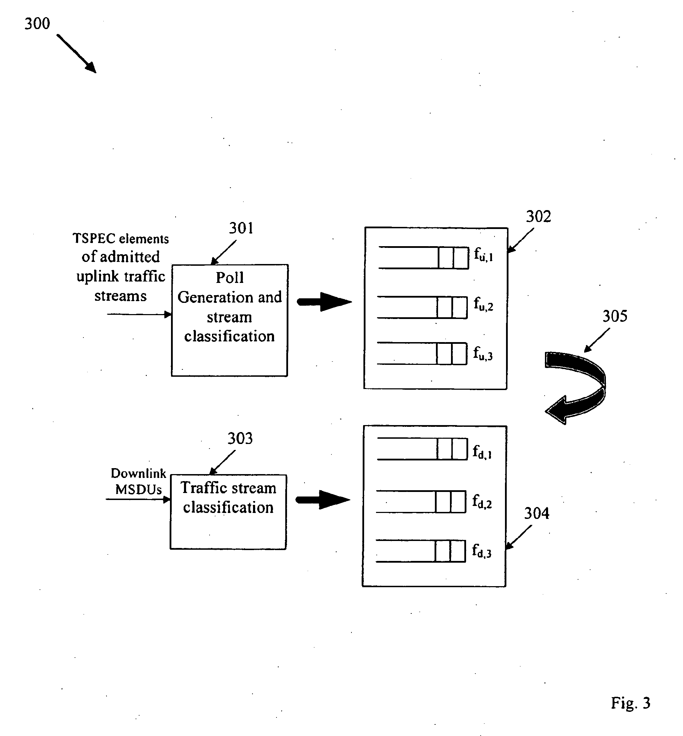

Figure 3 shows an exemplary architecture for scheduling the transmission of uplink and downlink traffic streams at the QoS access point 101 of Fig. 1. Uplink traffic streams with MSDUs queued, for example, at the wireless stations 102a, 102b and 102c and to be transmitted to the QoS access point 101 can be admitted for transmission by an admission control unit (not shown) of the QoS access point in a well known manner. Towards this end the wireless stations 102a, 102b and 102c request for transmission opportunities TXOPs by sending inter alia TSPEC elements to the QoS access point 101. A poll generation component 301 of the QoS access point 101 uses the TSPEC elements of the admitted uplink traffic streams to generate poll messages to be sent to the wireless stations 102a, 102b and 102c. These poll messages are classified by f_{u,1}, f_{u,2}, f_{u,3} according to the uplink traffic streams they correspond to and are queued in a storage buffer 302. A classification component 303 classifies the downlink MSDUs by f_{d,1}, f_{d,2}, f_{d,3} according to their traffic streams to be sent to the wireless stations 102a, 102b and 102c and send them to a storage buffer 304. A scheduler 305, which may be the central scheduler 203d of Fig. 2, then schedules the transmission of head of line (HOL) poll messages and/or MSDUs stored in queues of the storage buffer 302 and 304, respectively, and transmits them on the wireless medium to the respective wireless QoS stations 102a, 102b and 102c.

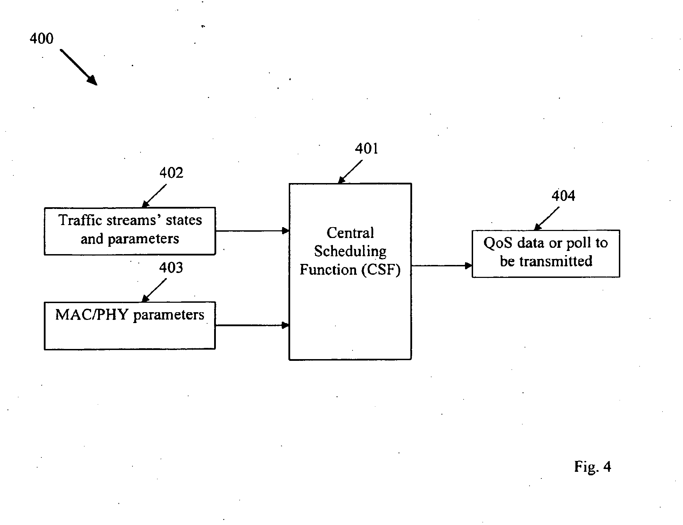

Figure 4 shows an exemplary functionality 400 for the operation of Central Scheduling Function (CSF) which runs the scheduling algorithm for scheduler 305 in architecture 300. The scheduler 305 corresponds to the central scheduler 203d as shown in Fig. 2. A functional component 402 has access to the scheduling parameters and stream states stored in an storage component 1401b -to be described later- of the poll message TSs f_{u,1}, f_{u,2}, f_{u,3} and downlink traffic flows f_{d,1}, f_{d,2}, f_{d,3} queued in storage buffer 304 of architecture 300. The state of a stream corresponds to whether or not the stream has at least one MSDU to be transmitted. A functional component 403 has access to the MAC/PHY parameters of the storage component 1401a (to be described later). A central scheduling function (CSF) module 401 receives the scheduling parameters and MAC/PHY parameters from the functional components 402 and 403. The CSF module 401 determines in response to the scheduling parameters and MAC/PHY parameters, the current MSDUs of a downlink traffic stream or a poll message to be transmitted, and a functional component 404 passes the MSDUs of the downlink traffic stream or the poll message to a wireless transmitter (not shown) for transmission via the wireless channel to a respective wireless station. It is to be noted that the downlink traffic stream can contain QoS data such as voice over IP data or multimedia data. Furthermore, the wireless transmitter is part of the physical layer of the QoS access point 101. Next, the operation of scheduling uplink and downlink traffic streams performed by the central scheduler 305 and 203d, respectively, is described in detail.

It is assumed, that the admission control unit of the QoS access point 101 maintains a set A of uplink and downlink traffic streams that have been admitted to be transmitted. It is further assumed, that a schedule set S constitutes a set of traffic streams currently being scheduled and would not include, for instance, the downlink traffic streams in set A that currently have no data to send.

Each traffic stream *f* has an associated virtual time v_{f} which is used as a scheduling parameter as described below. In addition, an attribute called *"accruedCredit"* is associated with to each traffic stream and used as a further scheduling parameter. This attribute refers to the amount of credit a traffic stream accrues, e. g. in bytes, because of having to forgo its scheduled transmission owing to the fact that it is unable to transmit. If a traffic stream has a negative attribute *"accruedCredit"* it implies that it has used up the transmission opportunity of another traffic stream which was scheduled to transmit but unable to be transmitted. A traffic stream with negative *accruedCredit* is not allowed to be transmitted if there exists any traffic stream in the QBSS which can be transmitted and has a non negative *accruedCredit.* The aggregate of *accruedCredit* over all traffic streams in the schedule set S sums up to zero similar to the lag parameter in the known channel-condition independent fair queuing (CIF-Q) algorithm. The update procedure for *accruedCredit* and its significance will become clear in the description to follow.

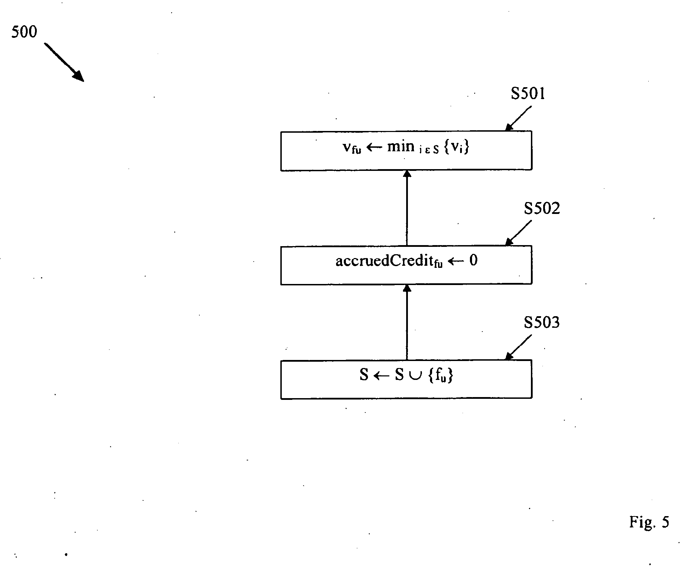

Figure 5 shows an exemplary method 500 to add an uplink traffic stream *fᵤ* to the schedule set *S* when it is admitted by the admission control unit. In Step S501, the virtual time *v_{fu}* of the traffic stream is set to the minimum of the virtual times of all traffic streams in the schedule set *S*. In Step S502, the attribute *"accruedCredit"* of the admitted traffic stream *fᵤ* is initialized to 0. The traffic stream is then added to schedule set *S* in Step S503.

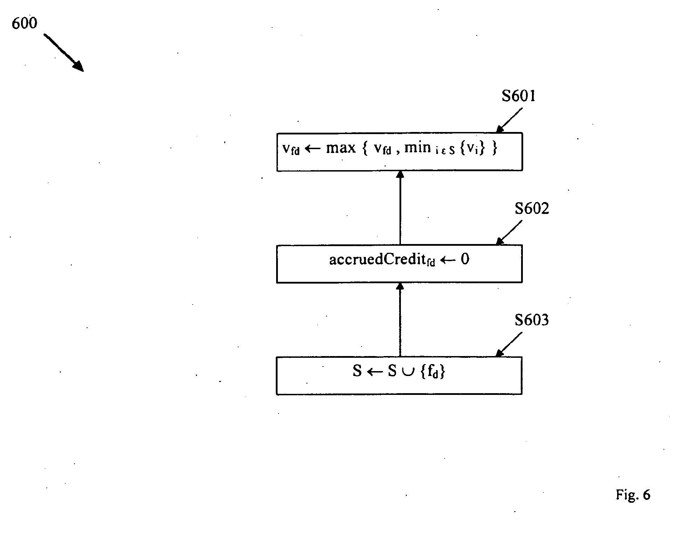

Figure 6 shows an exemplary method 600 to add a downlink traffic stream *f_{d}* to schedule set *S* which comprises data or MSDUs to send. In Step S601, the virtual time of the traffic stream *v_{fd}* is updated. When a stream in admitted for the first time by the admission control unit, it has its virtual time set to 0 and hence, in that case, in Step 601 the virtual time of the stream is set to the minimum of the virtual times of all traffic streams in the schedule set *S*. If there were no elements in *S* before the arrival of the new stream, the virtual time of the new stream remains 0. If the traffic stream *f_{d}* was admitted in the past and has a virtual time *v_{fd}* from the past as greater than the minimum of the virtual times of all traffic streams in schedule set S, or if there are no elements in *S*, then the value of *v_{fd}* remains changed. The assignment in step S601 prevents a newly backlogged traffic stream from gaining priority in scheduling by virtue of a having had a small virtual time in the past. In Step S602, the *accruedCredit* of the traffic stream *f_{d}* is initialized to 0. The traffic stream is added to schedule set S in Step S603.

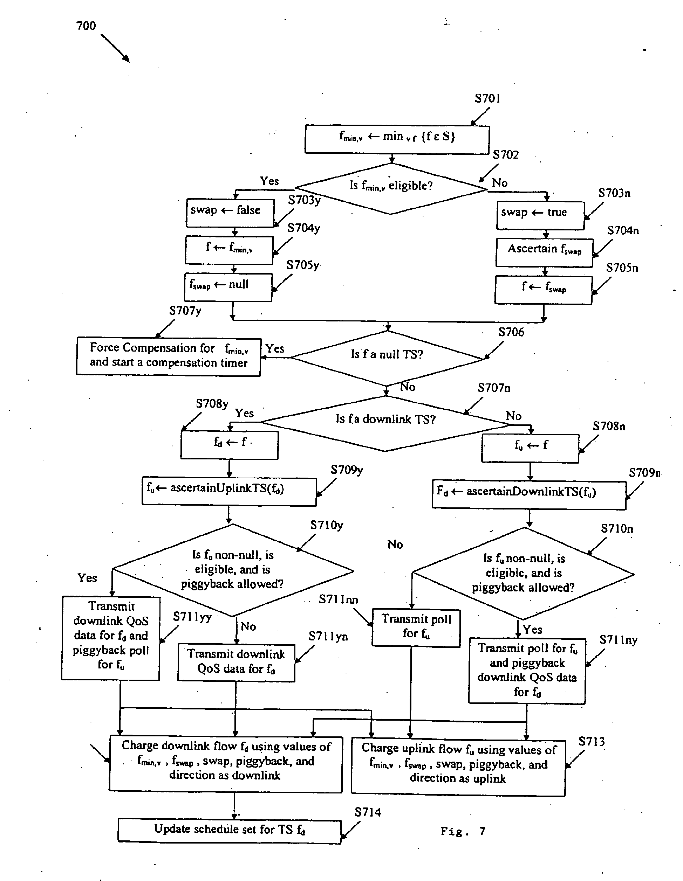

Figure 7 shows an exemplary method 700 to ascertain the next transmission of a traffic stream by executing the CSF 401 at the central scheduler 203d. In Step 701, the traffic stream *f_{min,v}* is assigned the traffic stream in the schedule set S with minimum virtual time. It is ascertained in Step S702 whether the traffic stream *f*_{*min*,*v*} is eligible to be scheduled. The method to determine the eligibility of the traffic stream will be described in method 800. In case the traffic stream is determined to be eligible, there is no need to find an alternative traffic stream that can be scheduled and thus a Boolean variable *swap* which represents whether or not the traffic stream *f_{min,v}* needs to be swapped with another traffic stream is assigned the value *false.* Traffic stream variable *f* is then assigned the value *f_{min,v}* determined in Step 704y. In step S705y, the traffic stream *f_{swap}* is assigned a *null* value.

If it is determined in Step S702 that the traffic stream *f_{min,v}* is not eligible to be scheduled, variable "*swap*" is assigned a value "true" in Step S703n. The traffic stream *f_{swap}* which should be swapped with traffic stream *f_{min,v}* is then determined in Step S704n using method 900 which will be described later. The method to ascertain traffic stream *f_{swap}* will be described in method 900. The traffic stream *f* is assigned the value *f_{swdp}* in Step S705n.

It is determined in Step S706 whether the traffic stream *f* is a null traffic stream. If the determination is affirmative, it implies that there is no traffic stream eligible for scheduling. In that event, forced compensation is performed for the traffic stream *f_{min,v}.* The method to perform forced compensation will be discussed in method 1300. If, on the other hand the traffic stream *f* is not a *null* traffic stream, it is ascertained in step S707n whether the traffic stream *f* is a downlink traffic stream. In case the traffic stream *f* is a downlink traffic stream variable *f_{d}* is assigned the value *f* in Step S708y. The uplink traffic stream *f*ᵤ corresponding to *f_{d}* is determined in Step S709y. This traffic stream would be *null* in case no uplink traffic stream corresponding to *f_{d}* exists in the schedule set *S*. In case *f*ᵤ is *non-null* and piggybacking is allowed as ascertained in Step S710y, downlink QoS data and a piggyback poll message for an uplink traffic stream *fᵤ* is transmitted in Step S711yy. Piggybacking refers to the overloading of a data frame with a poll to the station (STA) to which the frame is directed. The criteria for overloading may include, for example, the channel conditions at the time when the frame transmission occurs.

The uplink traffic stream *fᵤ* is charged in Step S713 and the downlink traffic stream *f_{d}* is charged in Step S712. Charging a traffic stream means, that the scheduling parameters of the traffic stream, for example the attribute "accruedCredit" and the "virtual time", are updated. In case the traffic stream *fᵤ* is *null* or piggybacking is not allowed as ascertained in Step S710y, downlink QoS data is transmitted in Step 711yn. The schedule set S is updated in S714 via method 1100 which will be described later.

In case the traffic stream *f* is ascertained to be an uplink traffic stream in Step S707n, the traffic stream variable *f*ᵤ is assigned the value *f* in Step S708n. The downlink traffic stream *f_{d}* corresponding to fᵤ is determined in Step S709n. This traffic stream would be *null* in case no downlink traffic stream corresponding to *f*ᵤ exists in the schedule set *S*. In case traffic stream variable *f_{d}* is non-*null* and piggybacking is allowed as ascertained in Step S710n, a poll message for *f*ᵤ and piggybacked downlink QoS data are transmitted in Step S711ny. The uplink traffic stream *f*ᵤ is charged in Step S713 and the downlink traffic stream *f_{d}* is charged in Step 712. In case variable *f_{d}* is *null* or piggybacking is not allowed as ascertained in Step S710n, a poll message for uplink traffic stream *fᵤ* is transmitted in Step 711ny. The downlink traffic stream is charged in Step S712 and the schedule set S is updated in Step S714 via method 1100.

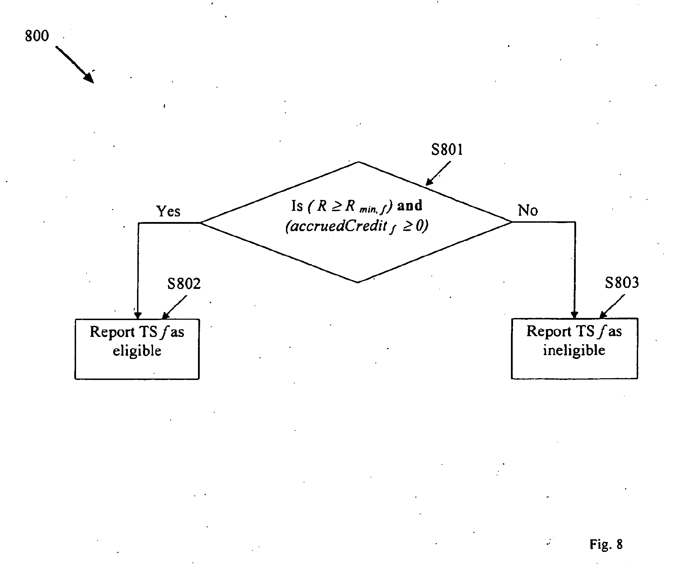

Figure 8 shows an exemplary method 800 to ascertain if a traffic stream *f* in schedule set *S* is eligible for transmission. In Step S801 it is determined if the current physical transmission rate *R* is greater than or equal to the minimum transmission rate *R _{min, f}* specified by the traffic stream in the TSPEC element and if the attribute *accruedCredit* for the traffic stream is non-negative. If the determination is affirmative, the traffic stream is declared to be eligible or else it is declared to be ineligible.

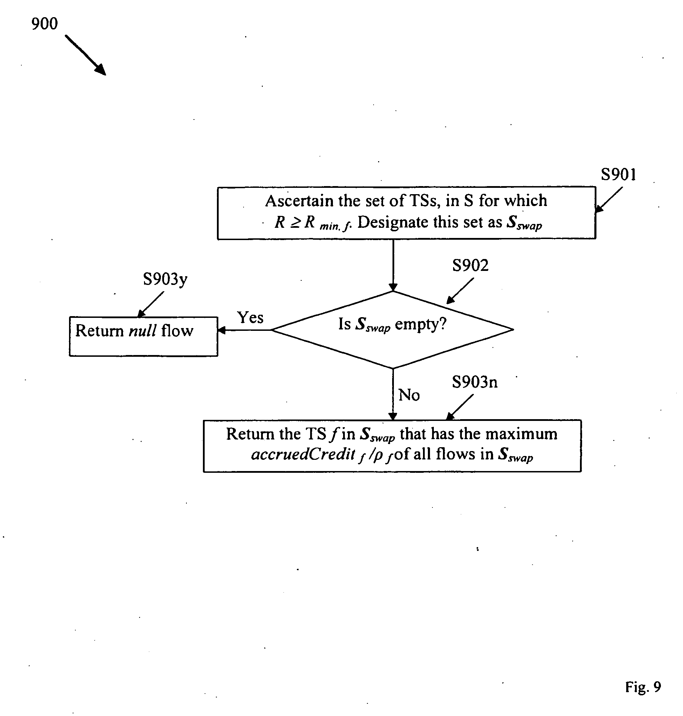

Figure 9 shows an exemplary method 900 to ascertain the swap traffic stream for scheduling as required, for example, by Step S704n of method 700. In step S901, the set of traffic streams *f* which have a minimum transmission rate *R_{min,f}* less than or equal to the current physical transmission rate *R* is determined. If this set *S_{swap}* is empty then the method returns a null traffic stream, or else it returns the traffic stream in *S_{swap}* that has the maximum value of *accruedcredit_{fl}*ρ*_{f}* in the set *S_{swap}.*

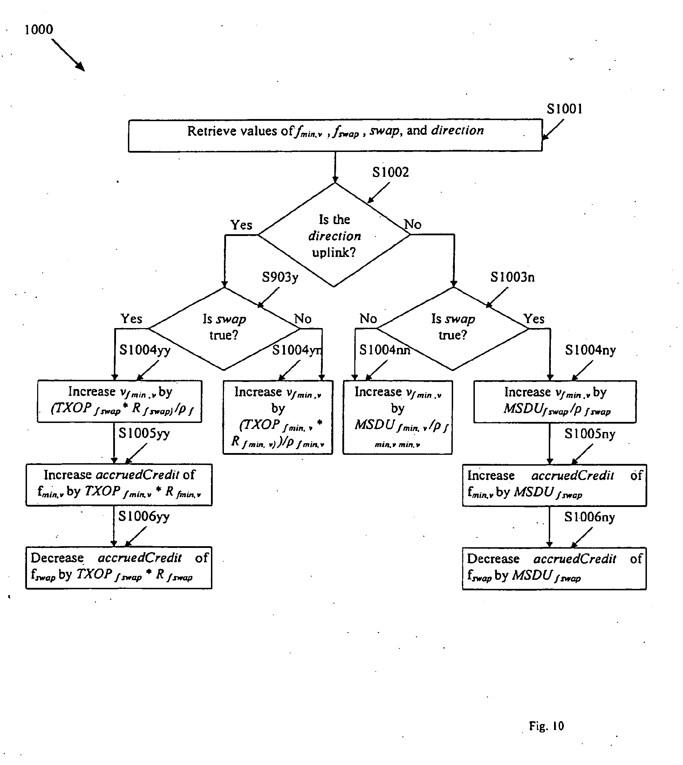

An exemplary method 1000 to charge a traffic stream is shown in Figure 10. The values of *f_{min,v}, f_{swap}, swap,* and direction are retrieved in Step S1001 from the executing method like Step 712 and Step 713 in method 700. It is determined in Step S1002 if the direction is uplink. If the determination is affirmative, then it is determined in Step 1003y whether *swap* is true. If swap does hold a value true, the virtual time of *f*_{*min*,*v*} is increased by *(TXOP _{f swap}* R _{f swap})* /*ρ _{fswap}* in Step S1004yy, where *TXOP _{f swap}* is the transmission opportunity for the uplink traffic stream granted by the central scheduler 203d, *R _{fswap}* is the physical transmission rate for the traffic stream *f_{swap}* and *ρ _{f swap}* is the mean data rate of the traffic stream *f_{swap}.* The attribute *accruedCredit* of *f_{min,v}* is increased by *TXOP _{f swap}* R _{f swap}* in Step S1005yy and the *accruedCredit* of *f_{swap}* is decreased by *TXOP _{f swap}* R _{f swap}* in Step S1006yy. If swap does not hold a value true as determined in Step S1002y then the virtual time of *f _{min ,v}* is increased by *(TXOP _{f swap}* R _{f swap})* /*ρ _{fswap}* in Step S1004yn and *accruedCredit* is not changed.

If the direction is determined in Step S1002 not to be uplink, then it is determined in Step 1003n whether *swap* is true. If swap does hold a value true, the virtual time of *f _{min,v}* is increased by *MSDU_{f swap}* /ρ *_{f swap}* in Step S1104yy where *MSDU_{f swap}* is the MSDU of the traffic stream *f_{swap}.* The *accruedCredit* of *f_{min,v}* is increased by *MSDU_{f} swap* in Step S1105ny and the *accruedCredit* of *f_{swap}* is decreased by *MsDU_{f swap}* in Step S1106ny. If swap does not hold a value true as determined in Step S1003n then the virtual time of *f _{min,v}* is increased by *MSDU_{fswap} l*ρ *_{f swap}* in Step S1004nn and *accruedCredit* is not changed.

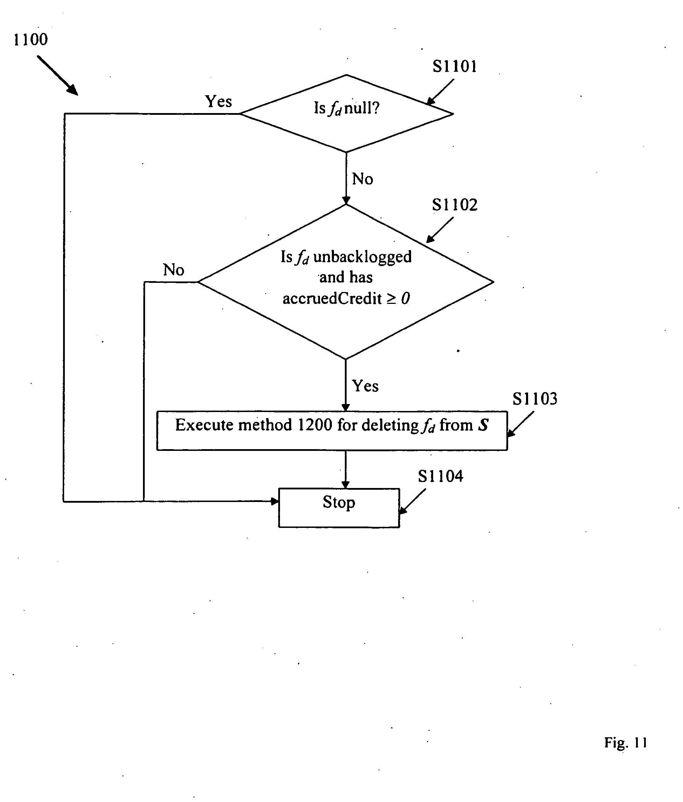

Figure 11 shows an exemplary method 1100 for updating the schedule set S with traffic streams *f_{d}* as required, for example by Step S714 of method 700. It is determined in Step 1101 whether traffic stream *f_{d}* is a *null* traffic stream. If variable *f* is ascertained to be *null* the method terminates in Step 1103. If variable *f_{d}* is not *null* then it is ascertained in Step S1101 if *f* is unbacklogged and has an attribute *"accruedCredit"* greater than or equal to 0. If this determination is affirmative method 1200 is executed for deleting *f* from schedule set S. The current method terminates in Step 1103.

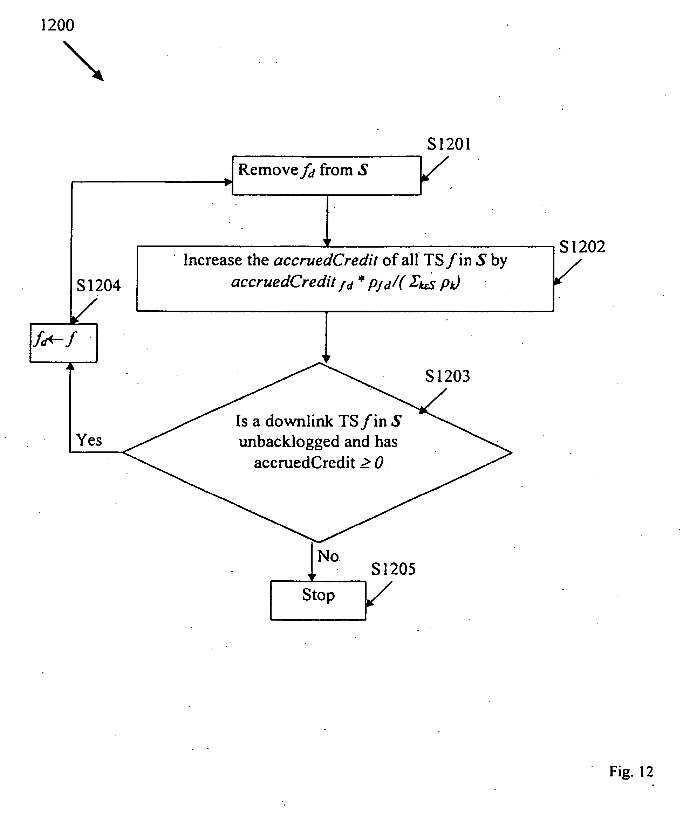

Figure 12 shows an exemplary method 1200 to delete a traffic stream from schedule set S. The traffic stream *f_{d}* is removed from schedule set S in Step S1201. The accrued credit of traffic stream *f_{d}* is then distributed amongst all traffic streams in schedule set S by increasing the attribute *"accruedCredit"* of all traffic streams by *accruedCredit _{fd}* * ρ*_{fd}*/ (*Σ_{kεS}* ρ*ₖ*). If a downlink traffic stream f in the updated schedule set S is determined in Step S1203 to be unbacklogged and having *accruedCredit* greater than or equal to 0, then *f_{d}* is assigned this traffic stream *f* in Step S1204 and method 1200 is executed again, otherwise the method terminates in Step S1205.

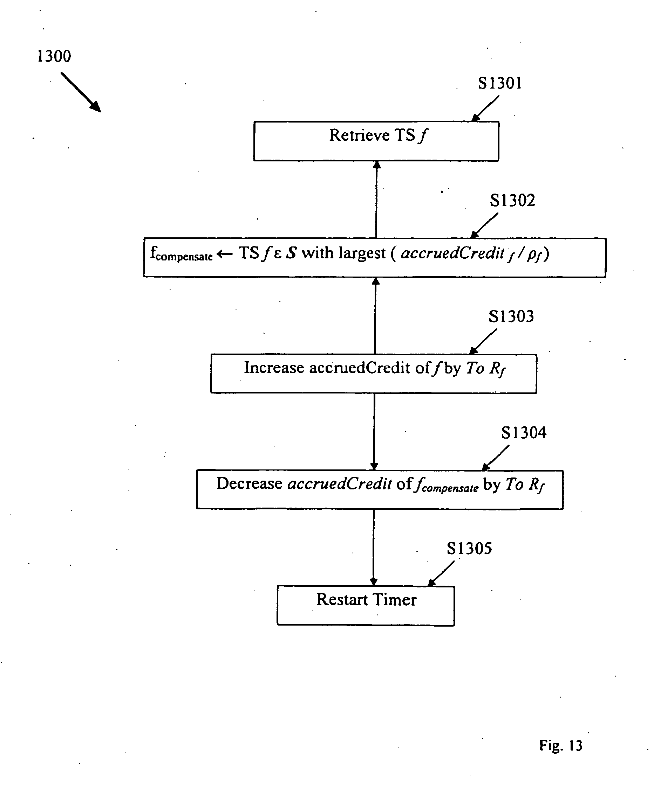

An exemplary method 1300 to force compensation for a traffic stream *f* is shown in Figure 13. The traffic stream *f* to be compensated is retrieved from the executing step, for example, by Step S707y of method 700 in Step S1301. In Step 1302, traffic stream *f_{compensate}* is ascertained as the traffic stream *f* in schedule set S with largest *(accruedCredit _{f}*/ρ*_{f})*. The accruedCredit of traffic stream *f* is increased by *To*R_{f}* in Step S1303 and that of *f_{compensate}* is decreased by the same amount. To represents the timer timeout value. The timer is restarted in step S1305. After expiration of the timeout value method 700 is finished.

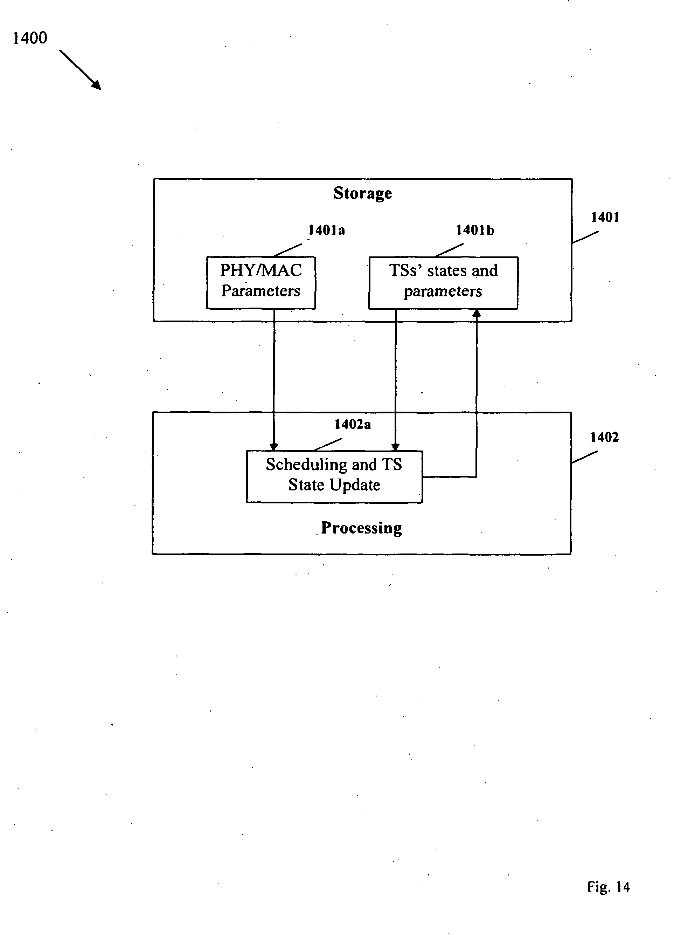

Figure 14 shows an exemplary QoS access point 1400 to perform the exemplary methods 500 - 1200. The QoS access point 101 of Fig. 1 can be implemented by QoS access point 1400. The QoS access point 1400 comprises a storage arrangement 1401 and a processing unit 1402. The storage unit 1401 stores instructions employed by the processing unit 1402 for performing the fair centralized scheduling method as described above. In addition, it comprises a storage module 1401a that stores the MAC and PHY parameters that may be needed by executing the central scheduling function (CSF) 401. These parameters include, for example, the current physical data rate R as determined by the currently employed modulation and coding scheme. Furthermore, a storage module 1401b stores the traffic streams and their parameters. The set of traffic stream parameters includes the virtual *V_{f}*, the attribute *accruedCredit_{f},* the transmission opportunity *TXOP_{f},* the trasmission rate *R_{f},* ρ*_{f}, direction, status* and *MSDU_{f}* for each traffic stream *f*. The parameter "*direction*" indicates whether the traffic stream is an uplink or a downlink traffic stream. The parameter "*status*" indicates whether the traffic stream belongs to the schedule set S and whether it is the traffic stream to be scheduled next. The processing unit 1402 comprises a computation module 1402a for performing scheduling computations for methods 500 to 1200 and updating the status of the traffic streams. The computation module 1402a performs the hybrid coordinator function (HCF) and in particular the central scheduling function (CSF) as depicted in Fig. 2. Towards this end computation module 1402a accesses the storage modules 1401a and 1401b and updates the traffic stream parameters *v_{f}, accruedCredit_{f}* and status of the traffic streams after performing the scheduling operations.

A pseudocode for the fair scheduling algorithm described in methods 500-1300 is presented hereunder. The functions *includeUplinkTSInScheduleSet, includeDownlinkTSInScheduleSet, ascertainNext-Transmission, isEligible, ascertainSwapTS, chargeTSs, updateScheduleSet, deleteFromScheduleSet, forceCompensationOnTimeout* respectively represent methods 500, 600, 700, 800, 900 1000, 1100, 1200, and 1300.

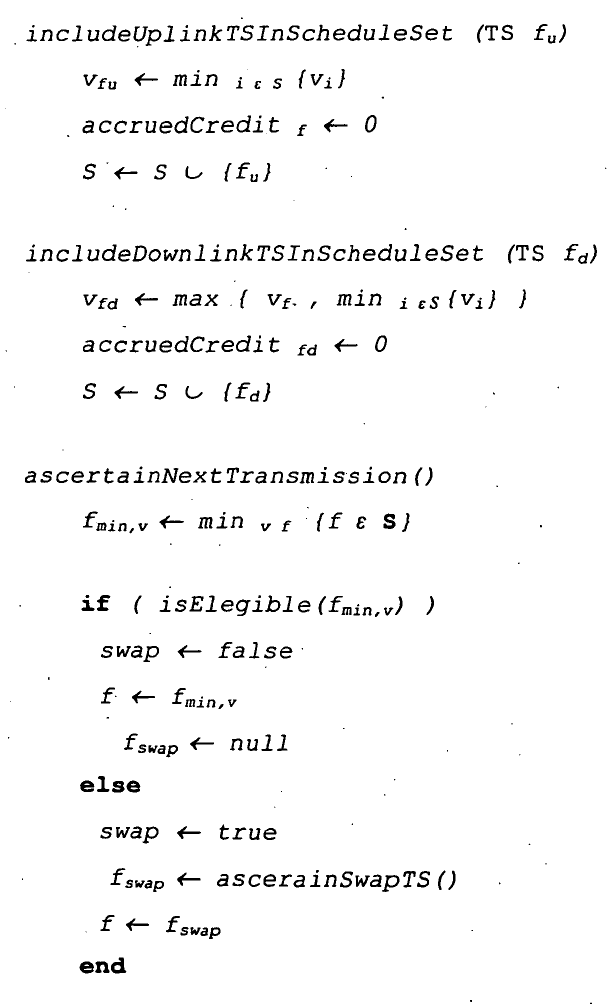

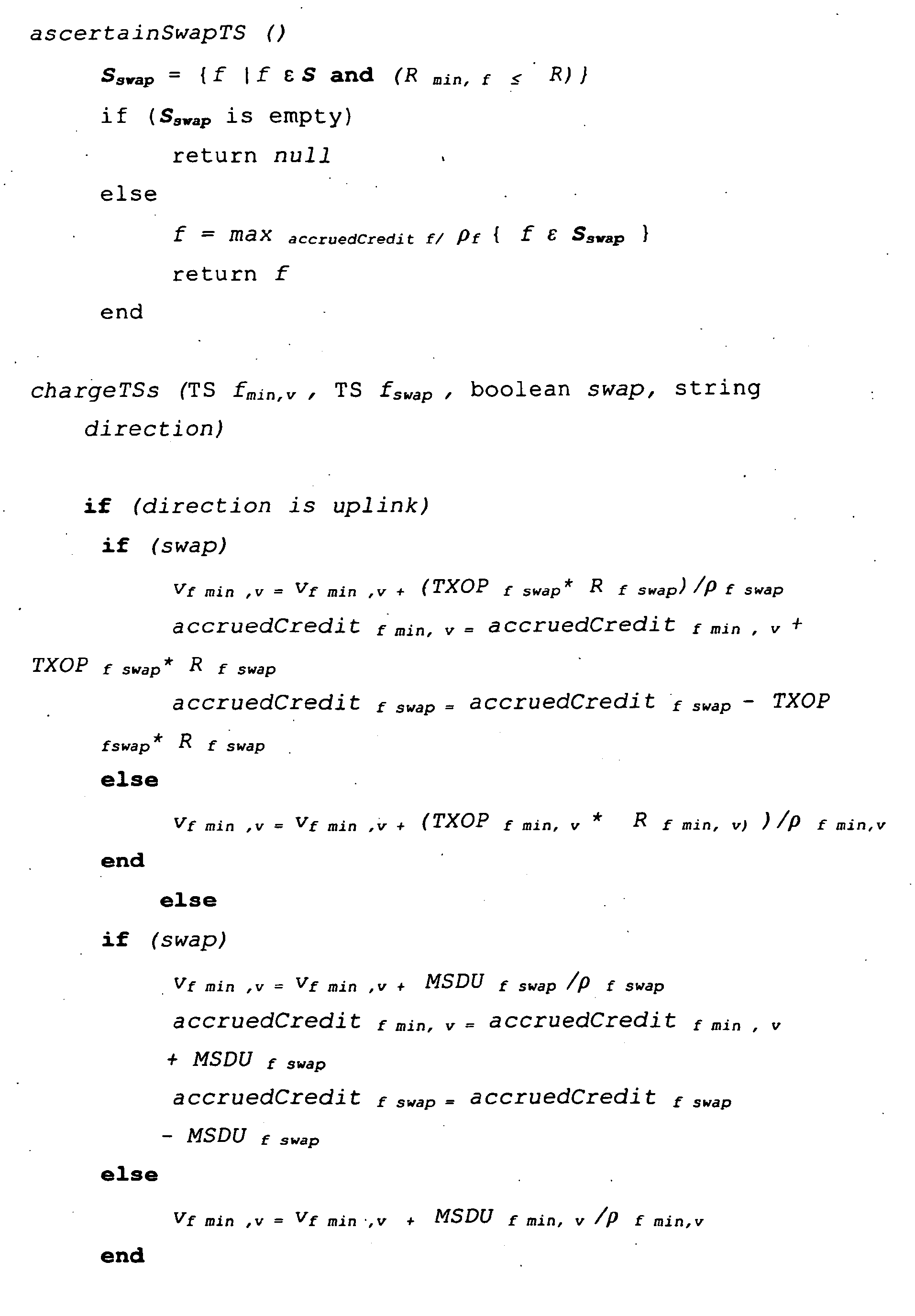

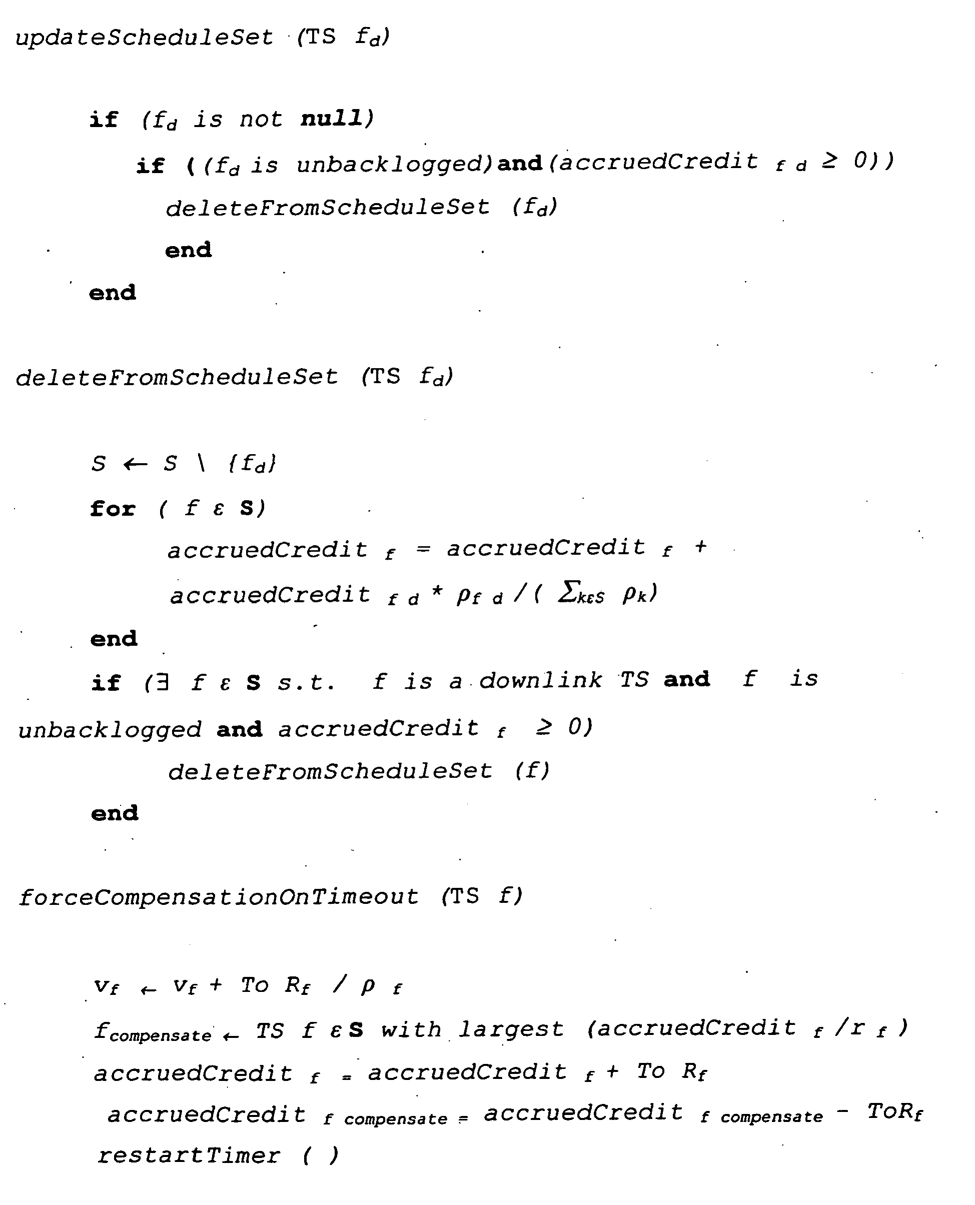

## Claims

1. A method for centralized scheduling of the transmission of uplink and/or downlink traffic streams by a QoS access point (101, 1400) in a wireless local area network supporting QoS data transmission between the QoS access point (101, 1400) and at least one QoS wireless station (102a, 102b, 102c), the method comprising the steps of:
a. Storing, at the QoS access point (101, 1400), a plurality of downlink traffic streams to be scheduled by the QoS access point (101, 1400),; and
b) Storing, at the QoS access point (101, 1400), a plurality of poll messages to be scheduled by the QoS access point (101, 1400), each poll message corresponding to a respective uplink traffic stream to be sent from a QoS wireless station (102a, 102b, 102c) to the QoS access point (101, 1400);
c) Storing, at the QoS access point (101, 1400), the physical transmission rate and for each downlink traffic and poll message scheduling parameters, wherein the scheduling parameters include a virtual time, and an accruedCredit value for each traffic stream to be scheduled, the accruedCredit value evaluating the service that a traffic stream has not been transmitted due to the physical transmission rate of the wireless channel being lower than the minimum transmission rate required by the respective traffic stream;
d. Selecting, at the Qos access point (101, 1400), the traffic stream having the minimum virtual time associated therewith;
e. Determining, at the QoS access point (101, 1400), whether the selected traffic stream fulfils predetermined eligibility criteria for transmission by determining whether the physical transmission rate on the wireless channel is greater than the minimum transmission rate associated with the selected traffic stream and determining whether the *accruedCredit* value of the selected traffic stream is non-negative;
f. if the selected traffic stream is eligible for transmission and comprises downlink traffic, transmission of the selected traffic stream on the wireless channel from the QoS access point (101, 1400) to a predetermined QoS station, or, if the selected traffic stream is eligible for transmission and comprises uplink traffic stream, transmission of the poll message corresponding to the selected uplink traffic stream on the wireless channel from the QoS access point (101, 1400) to the predetermined QoS station to initiate the transmission of the selected uplink traffic stream from the predetermined QoS station to the QoS access point (101, 1400);
g. Updating the scheduling parameters of the traffic streams to be scheduled;
h. Repeating steps b. to g. for scheduling the next transmission.

2. The method of claim 1,
wherein the virtual time is the normalized fair amount of service that a traffic stream should have received by a given time.

3. The method of claim 1 or 2,
wherein an alternative traffic stream is selected, if the determinations of step le) are not affirmative.

4. The method of claim 3, wherein the alternative traffic stream is selected which has the maximum ratio *accruedCredit value*/*p,* wherein p is the mean data transmission rate associated with the alternative traffic stream.

5. The method of claim 3 or 4, **characterised by** determining whether the selected alternative traffic stream is eligible for transmission and by executing a forced compensation if the selected alternative traffic stream is not eligible for transmission.

6. The method of claim 5, wherein the step of executing a forced compensation comprises the step of selecting the compensation traffic stream which has the largest ratio *accruedCredit value*/*p,* the step of increasing the accruedCredit parameter of the selected alternative traffic stream by T₀*R and the step of decreasing the accruedCredit parameter of the selected compensation traffic stream by T₀*R, , wherein T₀ represents a timeout of a timer and R represents the physical transmission rate of the selected alternative traffic stream.

7. The method of any one of the claims 1 to 6,
wherein each uplink traffic stream to be scheduled is represented by a set of TSPEC parameters, which includes a mean data rate p, a nominal MSDU size, and a transmission opportunity, wherein the TSPEC parameters are provided by TSPEC elements to the QoS access point (101, 1400).

8. The method of any one of the claims 1 to 7, wherein the plurality of traffic streams to be scheduled comprises uplink traffic streams which have been admitted for transmission from at least one wireless QoS station to the QoS access point (101, 1400) and/or downlink traffic streams admitted to be transmitted from the QoS access point (101, 1400) to respective wireless QoS stations.

9. The method of any one of the claims 1 to 8, wherein a parameter representing the transmission direction is associated with each traffic stream to be scheduled, wherein step f comprises the step of determining whether the selected traffic stream or the selected alternative traffic stream is a downlink or an uplink traffic stream.

10. The method of claim 9, wherein the poll message is piggybacked onto the QoS data for a selected downlink traffic stream currently scheduled for transmission to a respective wireless QoS station, if the uplink traffic stream belonging to the poll message is eligible for transmission from said wireless QoS station to the QoS access point (101, 1400).

11. The method of claim 9, wherein the QoS Data of the determined downlink traffic stream is piggybacked onto the poll message belonging to the uplink traffic stream currently scheduled for transmission, if the downlink traffic stream from the QoS access point (101, 1400) to the wireless QoS station is eligible for transmission.

12. The method of any one of the claims 7 to 11, wherein in step g) the TSPEC parameters associated with the plurality of traffic streams to be scheduled are used to update the scheduling parameters.

13. The method of claim 9, wherein in step g) the virtual time and the accruedCredit parameter of the selected traffic stream are each increased by a predetermined value, and the accruedCredit parameter of the alternative traffic stream is decreased by a predetermined value, if the selected alternative traffic stream is an uplink traffic stream.

14. The method of claim 13, wherein the virtual time is increased by *(TXOP f gwap* R _{f swap})* /*p _{fgwap},* where *TXOP _{f swap}* is the transmission opportunity interval for the alternative uplink traffic stream, *R _{fswap}* is the physical transmission rate for the alternative uplink traffic stream and *ρ f _{swap}* is the mean data transmission rate of the alternative uplink traffic stream and wherein the attribute *accruedCredit* is increased by *TXOP _{f swap}* R _{f swap}* and the accruedCredit of the alternative traffic stream is decreased by *TXOP f _{swap} * R _{f swap}.*

15. The method of claim 9, wherein the virtual time of the selected uplink traffic stream which is eligible for transmission is increased in step g) by a predetermined value and its accrued Credit parameter remains unchanged.

16. The method of claim 9, wherein the virtual time of the selected traffic stream is increased by *MSDU_{fswap}* /*ρ _{f} swap,* where *MSDU_{f swap} is* the MSDU size of the alternative traffic stream, wherein *accruedCredit* parameter of the selected traffic stream is increased *by MSDU_{F swap}* and wherein the *accruedCredit* parameter of the alternative traffic stream is decreased by *MSDU_{f}* swap, if the selected alternative traffic stream is a downlink traffic stream.

17. The method of claim 9, wherein the virtual time of the selected downlink traffic stream which is eligible for transmission is increased by *MSDU_{fswap} lp _{f swap}* and its *accruedCredit* parameter is not changed.

18. The method of any one of the claims 1 to 17, wherein the QoS access point (101, 1400) schedules downlink and uplink traffic streams of wireless QoS stations which belong to different QoS basis service sets.

19. A method of any one of the claims 1 to 18, wherein the QoS data to be transmitted via uplink and/or downlink traffic streams comprises multimedia data.

20. An IEEE 802.22e compliant access point, comprising
a first storage means (1401b) for storing a plurality of traffic streams to be scheduled, each traffic stream being represented by at least one scheduling parameter;
a second storage means (1401a) for storing physical parameters of the wireless channel and medium access control (MAC) parameters, and
a hybrid coordination module (202) adapted to execute the method of any one of the claims 1 to 19.

21. A storage means (1400) having stored a set of instructions therein, the set of instructions being executable by a processing unit of an IEEE 802.11e compliant access point to perform a method of any one of the claims 1 to 19.

## Patentansprüche

1. Verfahren zur zentralisierten Ablauffolgesteuerung der Übertragung von Uplink- und/oder Downlink-Verkehrsströmen durch einen QoS-Zugangspunkt (101, 1400) in einem drahtlosen lokalen Netz, das eine QoS-Datenübertragung zwischen dem QoS-Zugangspunkt (101, 1400) und mindestens einer QoS-Funkstation (102a, 102b, 102c) unterstützt, wobei das Verfahren die folgenden Schritte umfasst:
a) Speichern, in dem QoS-Zugangspunkt (101, 1400), einer Mehrzahl von durch den QoS-Zugangspunkt (101, 1400) zu terminierenden Downlink-Verkehrsströmen;
b) Speichern, in dem QoS-Zugangspunkt (101, 1400), einer Mehrzahl von durch den QoS-Zugangspunkt (101, 1400) zu terminierenden Abruf-Nachrichten, wobei jede Abruf-Nachricht einem jeweiligen Uplink-Verkehrsstrom entspricht, der von einer QoS-Funkstation (102a, 102b, 102c) an den QoS-Zugangspunkt (101, 1400) gesendet werden soll;
c) Speichern, in dem QoS-Zugangspunkt (101, 1400), der physikalischen Übertragungsrate sowie von Terminierungsparametern für jeden Downlink-Verkehr und jede Abruf-Nachricht, wobei die Terminierungsparameter eine virtuelle Zeit und einen *gesammeltesGuthaben-*Wert für jeden zu terminierenden Verkehrsstrom umfassen, wobei der *gesammeltesGuthaben-*Wert den Service auswertet, dass ein Verkehrsstrom deshalb nicht übertragen wird, weil die physikalische Übertragungsrate des Funkkanals niedriger ist als die minimale Übertragungsrate, die der jeweilige Verkehrsstrom benötigt;
d) Auswählen, in dem QoS-Zugangspunkt (101, 1400), desjenigen Verkehrsstromes, dem die minimale virtuelle Zeit zugeordnet ist;
e) Bestimmen, in dem QoS-Zugangspunkt (101, 1400), ob der ausgewählte Verkehrsstrom vorgegebene Auswählbarkeitskriterien für die Übertragung erfüllt, indem festgestellt wird, ob die physikalische Übertragungsrate auf dem Funkkanal höher ist als die minimale Übertragungsrate, die dem ausgewählten Verkehrsstrom zugeordnet ist, und indem festgestellt wird, ob der *gesammeltesGuthaben-*Wert des ausgewählten Verkehrsstrom nicht negativ ist;
f) wenn der ausgewählte Verkehrsstrom für die Übertragung infrage kommt und Downlink-Verkehr umfasst, Übertragen des ausgewählten Verkehrsstromes auf dem Funkkanal von dem QoS-Zugangspunkt (101, 1400) zu einer vorgegebenen QoS-Station, oder, wenn der ausgewählte Verkehrsstrom für die Übertragung infrage kommt und einen Uplink-Verkehrsstrom umfasst, Senden der Abruf-Nachricht, die dem ausgewählten Uplink-Verkehrsstrom entspricht, auf dem Funkkanal von dem QoS-Zugangspunkt (101, 1400) zu der vorgegebenen QoS-Station, um die Übertragung des ausgewählten Uplink-Verkehrsstromes von der vorgegebenen QoS-Station zu dem QoS-Zugangspunkt (101, 1400) zu initiieren;
g) Aktualisieren der Terminierungsparameter der zu terminierenden Verkehrsströme;
h) Wiederholen der Schritte b) bis g) zur Terminierung der nächsten Übertragung.

2. Verfahren nach Anspruch 1,
wobei die virtuelle Zeit dem normierten, angemessenen Maß an Service entspricht, der einem Verkehrsstrom bis zu einem gegebenen Zeitpunkt zugekommen sein sollte.

3. Verfahren nach Anspruch 1 oder 2,
wobei ein alternativer Verkehrsstrom ausgewählt wird, wenn die Feststellung in Schritt 1e) nicht positiv sind.

4. Verfahren nach Anspruch 3, wobei derjenige alternative Verkehrsstrom ausgewählt wird, der das maximale Verhältnis *gesammeltesGuthaben-Wert*/*ρ* aufweist, wobei *ρ* die mittlere Datenübertragungsrate ist, die dem alternativen Verkehrsstrom zugeordnet ist.

5. Verfahren nach Anspruch 3 oder 4, **dadurch gekennzeichnet dass** bestimmt wird, ob der ausgewählte alternative Verkehrsstrom für die Übertragung infrage kommt, und dass eine erzwungene Kompensation ausgeführt wird, falls der ausgewählte alternative Verkehrsstrom nicht für die Übertragung infrage kommt.

6. Verfahren nach Anspruch 5, wobei der Schritt des Ausführens einer erzwungenen Kompensation den Schritt umfasst, denjenigen Kompensations-Verkehrsstrom auszuwählen, der das größte Verhältnis *gesammeltesGuthaben-Wert*/*ρ* aufweist, den Schritt des Erhöhens des *gesammeltesGuthaben*-Parameters des ausgewählten alternativen Verkehrsstromes um T₀*R, und den Schritt des Verringerns des *gesammeltesGuthaben-*Parameters des ausgewählten Kompensations-Verkehrsstromes um T₀*R, wobei T₀ eine Auszeit eines Zeitgebers ist und R die physikalische Übertragungsrate des ausgewählten alternativen Verkehrsstromes ist.

7. Verfahren nach einem der Ansprüche 1 bis 6,
wobei jeder zu terminierende Uplink-Verkehrsstrom durch einen Satz von TSPEC-Parameter dargestellt wird, die eine mittlere Datenrate ρ, eine nominelle MSDU-Größe und eine Übertragungsgelegenheit umfassen, wobei die TSPEC-Parameter dem QoS-Zugangspunkt (101, 1400) von TSPEC-Elementen bereitgestellt werden.

8. Verfahren nach einem der Ansprüche 1 bis 7, wobei die Mehrzahl der zu terminierenden Verkehrsströme Uplink-Verkehrsströme umfasst, die zur Übertragung von mindestens einer QoS-Funkstation zu dem QoS-Zugangspunkt (101, 1400) zugelassen wurden, und/oder Downlink-Verkehrsströme, die zur Übertragung von dem QoS-Zugangspunkt (101, 1400) an jeweilige QoS-Funkstationen zugelassen wurden.

9. Verfahren nach einem der Ansprüche 1 bis 8, wobei jedem zu terminierenden Verkehrsstrom ein Parameter zugeordnet wird, der die Übertragungsrichtung repräsentiert, wobei der Schritt f) den Schritt umfasst festzustellen, ob der ausgewählte Verkehrsstrom oder der ausgewählte alternative Verkehrsstrom ein Downlink- oder ein Uplink-Verkehrsstrom ist.

10. Verfahren nach Anspruch 9, wobei die Abruf-Nachricht huckepack auf den QoS-Daten für einen ausgewählten Downlink-Verkehrsstrom, der momentan zur Übertragung an eine jeweilige QoS-Funkstation terminiert ist, gesendet wird, falls der Uplink-Verkehrsstrom, der zu der Abruf-Nachricht gehört, für die Übertragung von der QoS-Funkstation zu dem QoS-Zugangspunkt (101, 1400) infrage kommt.

11. Verfahren nach Anspruch 9, wobei die QoS-Daten des bestimmten Downlink-Verkehrsstromes huckepack auf der Abruf-Nachricht gesendet werden, die zu dem Uplink-Verkehrsstrom gehört, der momentan zur Übertragung terminiert ist, falls der Downlink-Verkehrsstrom von dem QoS-Zugangspunkt (101, 1400) zu der QoS-Funkstation für die Übertragung infrage kommt.

12. Verfahren nach einem der Ansprüche 7 bis 11, wobei in Schritt g) die TSPEC-Parameter, die der Mehrzahl von zu terminierenden Verkehrsströmen zugeordnet sind, zur Aktualisierung der Terminierungsparameter genutzt werden.

13. Verfahren nach Anspruch 9, wobei in Schritt g) die virtuelle Zeit und der *gesammeltesGuthaben*-Parameter des ausgewählten Verkehrsstromes jeweils um einen vorgegebenen Wert erhöht werden und der *gesammeltesGuthaben-* Parameter des alternativen Verkehrsstromes um einen vorgegebenen Wert verringert wird, wenn der ausgewählte alternative Verkehrsstrom ein Uplink-Verkehrsstrom ist.

14. Verfahren nach Anspruch 13, wobei die virtuelle Zeit um (*TXOP _{f swap} * R _{f Skap}*) / *ρ _{f swap}* erhöht wird, wobei *TXOP _{f swap}* das Intervall der Übertragungsgelegenheit für den alternativen Uplink-Verkehrsstrom ist, *R _{f swap}* die physikalische Übertragungsrate für den alternativen Uplink-Verkehrsstrom ist und *ρ _{f swap}* die mittlere Datenübertragungsrate des alternativen Uplink-Verkehrsstromes ist, und wobei das Attribut *gesammeltesGuthaben* um *TXOP _{f swap}* * *R f _{swap}* erhöht wird, und *gesammeltesGuthaben* des alternativen Verkehrsstromes um *TXOP _{f swap}* * *R f _{swap}* vermindert wird.

15. Verfahren nach Anspruch 9, wobei die virtuelle Zeit des ausgewählten Uplink-Verkehrsstromes, der zur Übertragung infrage kommt, in Schritt g) um einen vorgegebenen Wert erhöht wird und dessen *gesammeltesGuthaben-*Parameter unverändert bleibt.

16. Verfahren nach Anspruch 9, wobei die virtuelle Zeit des ausgewählten Verkehrsstromes um *MSDU f _{swap}* /ρ *f _{swap}* erhöht wird, wobei *MSDU _{f swap}* die MSDU-Größe der alternativen Verkehrsstromes ist, wobei der *gesammeltesGuthaben*-Parameter des ausgewählten Verkehrsstromes um *MSDU _{f swap}* erhöht wird und wobei der *gesammeltesGuthaben*- Parameter des alternativen Verkehrsstromes um *MSDU f _{swap}* vermindert wird, wenn der ausgewählte alternative Verkehrsstrom ein Downlink-Verkehrsstrom ist.

17. Verfahren nach Anspruch 9, wobei die virtuelle Zeit des ausgewählten Downlink-Verkehrsstromes, der zur Übertragung infrage kommt, um *MSDU _{f swap}* / *ρ _{f swap}* erhöht wird und dessen *gesammeltesGuthaben*-Parameter unverändert bleibt.

18. Verfahren nach einem der Ansprüche 1 bis 17, wobei der QoS-Zugangspunkt (101, 1400) Downlink- und Uplink-Verkehrsströme von drahtlosen QoS-Stationen terminiert, die zu verschiedenen QoS-Basisservicegeräten gehören.

19. Verfahren nach einem der Ansprüche 1 bis 18, wobei die QoS-Daten, die über Uplink- und/oder Downlink-Verkehrsströme übertragen werden sollen, Multimedia-Daten umfassen.

20. IEEE 802.22e-kompatibler Zugangspunkt, welcher umfasst:
eine erste Speichereinrichtung (1401b) zum Speichern einer Mehrzahl von zu terminierenden Verkehrsströmen, wobei jeder Verkehrsstrom durch mindestens einen Terminierungsparameter repräsentiert wird,
eine zweite Speichereinrichtung (1401a) zum Speichern von physikalischen Parametern des Funkkanals und von Medium Access Control (MAC) -Parametern, und
ein Hybrid-Koordinierungsmodul (202), das zum Ausführen des Verfahrens nach einem der Ansprüche 1 bis 19 ausgelegt ist.

21. Speichereinrichtung (1400) mit einem Satz von darin gespeicherten Anweisungen, wobei der Satz von Anweisungen durch eine Verarbeitungseinheit eines IEEE 802.11e-kompatiblen Zugangspunktes ausführbar ist, um ein Verfahren nach einem der Ansprüche 1 bis 19 auszuführen.

## Revendications

1. Procédé d'ordonnancement centralisé de la transmission des flux de trafic montant et/ou descendant par un point d'accès avec QoS (101, 1400) sur un réseau local sans fil supportant la transmission de données avec QoS entre le point d'accès avec QoS (101, 1400) et au moins une station sans fil avec QoS (102a, 102b, 102c), le procédé comprenant les étapes consistant à :
a) stocker sur le point d'accès avec QoS (101, 1400) une pluralité de flux de trafic descendant à ordonnancer par le point d'accès avec QoS (101, 1400) ; et
b) stocker sur le point d'accès avec QoS (101, 1400) une pluralité de messages de scrutation à ordonnancer par le point d'accès avec QoS (101, 1400), chaque message de scrutation correspondant à un flux de trafic montant respectif à envoyer par une station sans fil avec QoS (102a, 102b, 102c) vers le point d'accès avec QoS (101, 1400) ;
c) stocker sur le point d'accès avec QoS (101, 1400) le débit de transmission physique et des paramètres d'ordonnancement pour chaque trafic descendant et chaque message de scrutation, les paramètres d'ordonnancement comprenant une durée de temps virtuelle et une valeur de crédit accumulé pour chaque flux de trafic à ordonnancer, la valeur de crédit accumulé évaluant le service pendant lequel un flux de trafic n'a pas été transmis du fait que le débit de transmission physique du canal sans fil est inférieur du débit de transmission minimal exigé par le flux de trafic respectif ;
d) sélectionner sur le point d'accès avec QoS (101, 1400) le flux de trafic associé à la durée de temps virtuelle la plus faible ;
e) déterminer sur le point d'accès avec QoS (101, 1400) si le flux de trafic sélectionné répond aux critères d'éligibilité prédéterminés de la transmission en déterminant si le débit de transmission physique sur le canal sans fil est supérieur au débit de transmission minimal associé au flux de trafic sélectionné et déterminer si la valeur de crédit accumulé du flux de trafic sélectionné n'est pas négatif ;
f) si le flux de trafic sélectionné est éligible pour la transmission et comprend du trafic descendant, transmettre le flux de trafic sélectionné sur le canal sans fil entre le point d'accès avec QoS (101, 1400) et une station avec QoS prédéterminée ou, si le flux de trafic sélectionné est éligible pour la transmission et comprend un flux de trafic montant, transmettre le message de scrutation correspondant au flux de trafic montant sélectionné sur le canal sans fil entre le point d'accès avec QoS (101, 1400) et la station avec QoS prédéterminée afin de lancer la transmission du flux de trafic montant sélectionné entre la station avec QoS prédéterminée et le point d'accès avec QoS (101, 1400) ;
g) mettre à jour les paramètres d'ordonnancement des flux de trafic à ordonnancer ;
h) répéter les étapes b) à g) pour l'ordonnancement de la transmission suivante.

2. Procédé selon la revendication 1, dans lequel la durée de temps virtuel est la quantité de service équitable et normalisée dont un flux de trafic aurait dû bénéficier à un instant donné.

3. Procédé selon la revendication 1 ou 2, dans lequel un autre flux de trafic est sélectionné si les déterminations de l'étape le) ne sont pas positives.

4. Procédé selon la revendication 3, dans lequel on sélectionne un autre flux de trafic ayant le rapport valeur de crédit accumulé/ρ le plus élevé, où ρ est le débit moyen de transmission de données associé audit autre flux de trafic.

5. Procédé selon la revendication 3 ou 4, **caractérisé par** l'étape consistant à déterminer si l'autre flux de trafic sélectionné est éligible pour la transmission et à exécuter une compensation forcée si l'autre flux de trafic sélectionné n'est pas éligible pour la transmission.

6. Procédé selon la revendication 5, dans lequel l'étape d'exécution d'une compensation forcée comprend l'étape consistant à sélectionner le flux de trafic de compensation qui possède le rapport valeur de crédit accumulé/ρ le plus élevé, l'étape consistant à augmenter le paramètre de crédit accumulé de l'autre flux de trafic sélectionné de T₀*R et l'étape consistant à diminuer le paramètre de crédit accumulé du flux de trafic de compensation sélectionné de T₀*R, où T₀ représente l'expiration d'un compteur de temps et R représente le débit de transmission physique de l'autre flux de trafic sélectionné.

7. Procédé selon l'une quelconque des revendications 1 à 6, dans lequel chaque flux de trafic montant à ordonnancer est représenté par un ensemble de paramètres TSPEC qui comprend un débit moyen de données ρ, une taille nominale MSDU et une opportunité de transmission, les paramètres TSPEC étant fournis par des éléments TSPEC au point d'accès avec QoS (101, 1400).

8. Procédé selon l'une quelconque des revendications 1 à 7, dans lequel la pluralité de flux de trafic à ordonnancer comprend des flux de trafic montant qui ont été acceptés pour la transmission entre au moins une station sans fil avec QoS et le point d'accès avec QoS (101, 1400) et/ou des flux de trafic descendant acceptés pour la transmission entre le point d'accès avec QoS (101, 1400) et des stations sans fil avec QoS respectives.

9. Procédé selon l'une quelconque des revendications 1 à 8, dans lequel un paramètre représentant une direction de transmission est associé à chaque flux de trafic à ordonnancer, l'étape f) comprenant l'étape consistant à déterminer si le flux de trafic sélectionné ou l'autre flux de trafic sélectionné est un flux de trafic descendant ou montant.

10. Procédé selon la revendication 9, dans lequel le message de scrutation est rajouté aux données de QoS pour un flux de trafic descendant sélectionné actuellement ordonnancé pour une transmission vers une station sans fil avec QoS respective, si le flux de trafic montant appartenant au message de scrutation est éligible pour la transmission entre ladite station sans fil avec QoS et le point d'accès avec QoS (101, 1400) .

11. Procédé selon la revendication 9, dans lequel les données de QoS du flux de trafic descendant déterminé sont rajoutées au message de scrutation appartenant au flux de trafic montant actuellement ordonnancé pour la transmission, si le flux de trafic descendant entre le point d'accès avec QoS (101, 1400) et la station sans fil avec QoS est éligible pour la transmission.

12. Procédé selon l'une quelconque des revendications 7 à 11, dans lequel, dans l'étape g), les paramètres TSPEC associés à la pluralité de flux de trafic à ordonnancer sont utilisés pour mettre à jour les paramètres d'ordonnancement.

13. Procédé selon la revendication 9, dans lequel, dans l'étape g), la durée de temps virtuelle et le paramètre de crédit accumulé du flux de trafic sélectionné sont augmentés tous deux d'une valeur prédéterminée et le paramètre de crédit accumulé de l'autre flux de trafic est diminué d'une valeur prédéterminée, si l'autre flux de trafic sélectionné est un flux de trafic montant.

14. Procédé selon la revendication 13, dans lequel la durée de temps virtuelle est augmentée de (TXOP_{f swap} * R_{f swap}) /ρ_{f swap}, où TXOP_{f swap} est l' intervalle d'opportunité de transmission pour l'autre flux de trafic montant, R_{f swap} est le débit de transmission physique pour l'autre flux de trafic montant et ρ_{f swap} est le débit moyen de transmission de données de l'autre flux de trafic montant, et dans lequel l'attribut de crédit accumulé est augmenté de TXOPf _{swap} * R_{f swap} et l'attribut de crédit accumulé de l'autre flux de trafic est diminué de TXOP_{f swap} * R_{f swap}.

15. Procédé selon la revendication 9, dans lequel la durée de temps virtuelle du flux de trafic montant sélectionné qui est éligible pour la transmission est augmentée à l'étape g) d'une valeur prédéterminée et son paramètre de crédit accumulé reste inchangé.

16. Procédé selon la revendication 9, dans lequel la durée de temps virtuelle du flux de trafic sélectionné est augmentée de MSDU_{f swap}/ ρ_{f swap}, où MSDU_{f swap} est la taille MSDU de l'autre flux de trafic, le paramètre de crédit accumulé du flux de trafic sélectionné étant augmenté de MSDU_{f swap} et le paramètre de crédit accumulé de l'autre flux de trafic étant diminué de MSDU_{f swap}, si l'autre flux de trafic sélectionné est un flux de trafic descendant.

17. Procédé selon la revendication 9, dans lequel la durée de temps virtuelle du flux de trafic descendant sélectionné qui est éligible pour la transmission est augmenté de MSDU_{f swap}/ρ_{f} swap et son paramètre de crédit accumulé n'est pas changé.

18. Procédé selon l'une quelconque des revendications 1 à 17, dans lequel le point d'accès avec QoS (101, 1400) ordonnance les flux de trafic descendants et montants de stations sans fil avec QoS qui appartiennent à différents ensembles de services QoS de base.

19. Procédé selon l'une quelconque des revendications 1 à 18, dans lequel les données de QoS à transmettre à l'aide des flux de trafic montant et/ou descendant comprennent des données multimédias.

20. Point d'accès compatible avec la norme IEEE 802.22e, comprenant :
un premier moyen de stockage (1401b) destiné à stocker une pluralité de flux de trafic à ordonnancer, chaque flux de trafic étant représenté par au moins un paramètre d'ordonnancement ;
un second moyen de stockage (1041a) destiné à stocker des paramètres physiques du canal sans fil et des paramètres de commande de l'accès au support (MAC) ; et
un module de coordination hybride (202) conçu pour exécuter le procédé selon l'une quelconque des revendications 1 à 19.

21. Moyen de stockage (1400) qui stocke un ensemble d'instructions, ledit ensemble d'instructions pouvant être exécuté par une unité de traitement d'un point d'accès conforme à la norme IEEE 802.11e pour exécuter un procédé selon l'une quelconque des revendications 1 à 19.
